(19)

Europäisches
Patentamt
European
Patent Office
Office européen
des brevets

(11) **EP 3 249 613 A1**

(12) **EUROPEAN PATENT APPLICATION**
published in accordance with Art. 153(4) EPC

(43) Date of publication:
**29.11.2017 Bulletin 2017/48**

(21) Application number: **15880866.7**

(22) Date of filing: **17.07.2015**

(51) Int Cl.:
**G06T 17/00** *(2006.01)*

(86) International application number:
**PCT/CN2015/084335**

(87) International publication number:
**WO 2016/123913 (11.08.2016 Gazette 2016/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **04.02.2015 CN 201510059955**

(71) Applicant: **HUAWEI TECHNOLOGIES CO., LTD.**
**Guangdong 518129 (CN)**

(72) Inventors:
• **CHEN, Zichong**
**Shenzhen**
**Guangdong 518129 (CN)**
• **ZHANG, Guofeng**
**Hangzhou**
**Zhejiang 310058 (CN)**
• **WANG, Kangkan**
**Hangzhou**
**Zhejiang 310058 (CN)**

(74) Representative: **Körber, Martin Hans**
**Mitscherlich PartmbB**
**Patent- und Rechtsanwälte**
**Sonnenstrasse 33**
**80331 München (DE)**

(54) **DATA PROCESSING METHOD AND APPARATUS**

(57) A data processing method and apparatus are provided. The method includes: obtaining a first reconstruction model of a target object (S110); dividing the first reconstruction model into M local blocks (S120); obtaining N target object sample alignment models, where each target object sample alignment model and the first reconstruction model have a same corresponding posture parameter, each target object sample alignment model includes M local blocks, the $i^{th}$ local block of each target object sample alignment model and the $i^{th}$ local block of the first reconstruction model are corresponding to a same part of the target object, and the $i^{th}$ local block of each target object sample alignment model is aligned with the $i^{th}$ local block of the first reconstruction model, where i is 1, ..., or M (S130); and approximating the N target object sample alignment models to the first reconstruction model, to determine a second reconstruction model that is of the target object and includes M local blocks (S140). The data processing method and apparatus can effectively improve model accuracy.

100

Obtain a first reconstruction model of a target object — S110

Divide the first reconstruction model into M local blocks, where different local blocks of the M local blocks of the first reconstruction model are corresponding to different parts of the target object, the different parts are represented by different part names, and M is a positive integer greater than 1 — S120

Obtain N target object sample alignment models, where a posture parameter corresponding to a posture of each target object sample alignment model is the same as a posture parameter corresponding to a posture of the first reconstruction model, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M — S130

Approximate the N target object sample alignment models to the first reconstruction model, to determine a second reconstruction model that is of the target object and includes M local blocks, where the $i^{th}$ local block of the second reconstruction model is determined according to the $i^{th}$ local block of each target object sample alignment model — S140

FIG. 1

## Description

This application claims priority to Chinese Patent Application No. 201510059955.9 filed with the Chinese Patent Office on February 4, 2015 and entitled "DATA PROCESSING METHOD AND APPARATUS", which is incorporated herein by reference in its entirety.

## TECHNICAL FIELD

Embodiments of the present invention relate to the field of data processing, and more specifically, to a data processing method and apparatus.

## BACKGROUND

Human body modeling is widely applied in the computer graphics and computer vision fields, such as movie special effects, 3D games, virtual reality, and man-machine interaction.

In a current human body modeling system, strong noise or a hole in a human body point cloud is introduced into a reconstructed human body model, resulting in relatively low accuracy of the human body model. Currently, no effective method is available for resolving the foregoing problem.

## SUMMARY

Embodiments of the present invention provide a data processing method and apparatus, to effectively improve model accuracy.

A first aspect provides a data processing method, where the method includes:

obtaining a first reconstruction model of a target object;

dividing the first reconstruction model into M local blocks, where different local blocks of the M local blocks of the first reconstruction model are corresponding to different parts of the target object, the different parts are represented by different part names, and M is a positive integer greater than 1;

obtaining N target object sample alignment models, where a posture parameter corresponding to a posture of each target object sample alignment model is the same as a posture parameter corresponding to a posture of the first reconstruction model, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M; and

approximating the N target object sample alignment models to the first reconstruction model, to determine a second reconstruction model that is of the target object and includes M local blocks, where the $i^{th}$ local block of the second reconstruction model is determined according to the $i^{th}$ local block of each target object sample alignment model, and i is 1, ..., or M.

With reference to the first aspect, in a first possible implementation of the first aspect, the approximating the N target object sample alignment models to the first reconstruction model, to determine a second reconstruction model that is of the target object and includes M local blocks includes:

obtaining the second reconstruction model according to the following formula:

$$K_i = B_i c_i + \mu_i \quad (i = 1, ..., M),$$

where $K_i$ is the $i^{th}$ local block of the M local blocks of the second reconstruction model, $B_i$ is a basis including the $i^{th}$ local blocks of the N target object sample alignment models, $\mu_i$ is an average value of vertex coordinates of the $i^{th}$ local blocks of the N target object sample alignment models, and $c_i$ is a coefficient vector of $B_i$, where a formula for obtaining $c_i$ includes:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 \right)$$

$$s.t. \quad c_i > 0 \quad (i = 1,...,M)$$

,

or

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$

$$s.t. \quad c_i > 0 \quad (i = 1,...,M)$$

,

where $\mathbf{C} = \left( c_1^T, c_2^T, ..., c_M^T \right)^T$, $V_i$ is the $i^{th}$ local block of the first reconstruction model, $\Gamma$ is a set of adjacent local blocks of the M local blocks of each target object sample alignment model, $(i, j) \in \Gamma$ represents that the $j^{th}$ local block of each target object sample alignment model is a local block adjacent to the $i^{th}$ local block of each target object sample alignment model, $B_j$ is a basis including the $j^{th}$ local blocks of the target object sample alignment models, $B_{ij}$ is used to represent a boundary vertex at a junction of the $i^{th}$ local block and the $j^{th}$ local block of each target object sample alignment model, $B_{ij}$ is a subset of $B_i$, $\mu_{ij}$ is an average value of $B_{ij}$, $B_{ji}$ is used to represent a boundary vertex at a junction of the $j^{th}$ local block and the $i^{th}$ local block of each target object sample alignment model, $B_{ji}$ is a subset of $B_j$, $\mu_{ji}$ is an average value of $B_{ji}$, $\beta$ is a weight, $\lambda$ is a weight, $\| \|_1$ is an L1 norm, and $\| \|_2$ is an L2 norm.

With reference to the first aspect or the first possible implementation of the first aspect, in a second possible implementation of the first aspect, adjacent local blocks of the M local blocks of the first reconstruction model have a common boundary vertex at a junction.

With reference to the first aspect, or the first or the second possible implementation of the first aspect, in a third possible implementation of the first aspect, the obtaining a first reconstruction model of a target object includes:

obtaining target object point cloud data of the target object;
obtaining a template model of the target object, where the template model is a model describing standard target object point cloud data of the target object in a preset standard posture;
determining a point correspondence between the target object point cloud data and the template model;
estimating, based on a skeleton-driven deformation technology and the point correspondence, a posture change parameter of the target object point cloud data relative to the template model; and
deforming, by using the posture change parameter of the target object point cloud data relative to the template model, the template model into the first reconstruction model with a same posture as the target object point cloud data.

With reference to the first aspect, or the first or the second possible implementation of the first aspect, in a fourth possible implementation of the first aspect, the obtaining a first reconstruction model of a target object includes:

obtaining target object point cloud data of the target object;
obtaining a template model of the target object, where the template model is a model describing standard target object point cloud data of the target object in a preset standard posture;
determining a point correspondence between the target object point cloud data and the template model;
estimating, based on a skeleton-driven deformation technology and the point correspondence, a posture change parameter of the target object point cloud data relative to the template model;
deforming, by using the posture change parameter of the target object point cloud data relative to the template model, the template model into a skeleton deformation model with a same posture as the target object point cloud data, so that the skeleton deformation model is aligned with the target object point cloud data; and
deforming, based on a mesh deformation technology, the skeleton deformation model, to obtain the first reconstruction model, so that the first reconstruction model matches a shape of the target object point cloud data.

With reference to any one of the first aspect or the first to the fourth possible implementations of the first aspect, in a fifth possible implementation of the first aspect, the obtaining N target object sample alignment models includes:

obtaining N target object sample models from a preset target object database;

deforming, based on the skeleton-driven deformation technology and according to the posture parameter of the first reconstruction model, the N target object sample models into N target object sample skeleton deformation models corresponding to the same posture parameter as the first reconstruction model;

dividing each target object sample skeleton deformation model into M local blocks, where the $i^{th}$ local block of each target object sample skeleton deformation model and the $i^{th}$ local block of the first reconstruction model are corresponding to a part that is of the target object and is represented by a same part name; and

performing at least one change of rotation, translation, or scaling on the $i^{th}$ local block of each target object sample skeleton deformation model, to obtain the N target object sample alignment models, where after the at least one change of rotation, translation, or scaling, the $i^{th}$ local block of each target object sample alignment model is aligned with the $i^{th}$ local block of the first reconstruction model, and i is 1, 2, ..., or M.

With reference to any one of the first aspect or the first to the fifth possible implementations of the first aspect, in a sixth possible implementation of the first aspect, the method further includes:

performing smooth optimization processing on the second reconstruction model.

A second aspect provides a data processing apparatus, where the apparatus includes:

a first obtaining module, configured to obtain a first reconstruction model of a target object;

a division module, configured to divide the first reconstruction model obtained by the obtaining module into M local blocks, where different local blocks of the M local blocks of the first reconstruction model are corresponding to different parts of the target object, the different parts are represented by different part names, and M is a positive integer greater than 1;

a second obtaining module, configured to obtain N target object sample alignment models, where a posture parameter corresponding to a posture of each target object sample alignment model is the same as a posture parameter corresponding to a posture of the first reconstruction model obtained by the first obtaining module, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M; and

a determining module, configured to approximate the N target object sample alignment models obtained by the second obtaining module to the first reconstruction model obtained by the first obtaining module, to determine a second reconstruction model that is of the target object and includes M local blocks, where the $i^{th}$ local block of the second reconstruction model is determined according to the $i^{th}$ local block of each target object sample alignment model, and i is 1, ..., or M.

With reference to the second aspect, in a first possible implementation of the second aspect, the determining module is specifically configured to:

obtain the second reconstruction model according to the following formula:

$$K_i = B_i c_i + \mu_i \qquad \left( i = 1,...,M \right),$$

where $K_i$ is the $i^{th}$ local block of the M local blocks of the second reconstruction model, $B_i$ is a basis including the $i^{th}$ local blocks of the N target object sample alignment models, $\mu_i$ is an average value of vertex coordinates of the $i^{th}$ local blocks of the N target object sample alignment models, and $c_i$ is a coefficient vector of $B_i$, where a formula for obtaining $c_i$ includes:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 \right)$$

$$s.t. \quad c_i > 0 \quad \left( i = 1, ..., M \right)$$

,

or

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$

$$s.t. \quad c_i > 0 \quad \left( i = 1, ..., M \right)$$

,

where $\mathbf{C} = \left( c_1^T, c_2^T, ..., c_M^T \right)^T$, $V_i$ is the $i^{th}$ local block of the first reconstruction model, $\Gamma$ is a set of adjacent local blocks of the M local blocks of each target object sample alignment model, $(i, j) \in \Gamma$ represents that the $j^{th}$ local block of each target object sample alignment model is a local block adjacent to the $i^{th}$ local block of each target object sample alignment model, $B_j$ is a basis including the $j^{th}$ local blocks of the target object sample alignment models, $B_{ij}$ is used to represent a boundary vertex at a junction of the $i^{th}$ local block and the $j^{th}$ local block of each target object sample alignment model, $B_{ij}$ is a subset of $B_i$, $\mu_{ij}$ is an average value of $B_{ij}$, $B_{ji}$ is used to represent a boundary vertex at a junction of the $j^{th}$ local block and the $i^{th}$ local block of each target object sample alignment model, $B_{ji}$ is a subset of $B_j$, $\mu_{ji}$ is an average value of $B_{ji}$, $\beta$ is a weight, $\lambda$ is a weight, $\| \|_1$ is an L1 norm, and $\| \|_2$ is an L2 norm.

With reference to the second aspect or the first possible implementation of the second aspect, in a second possible implementation of the second aspect, adjacent local blocks of the M local blocks of the first reconstruction model obtained by the first obtaining module have a common boundary vertex at a junction.

With reference to the second aspect, or the first or the second possible implementation of the second aspect, in a third possible implementation of the second aspect, the first obtaining module includes:

a first obtaining unit, configured to obtain target object point cloud data of the target object;
a second obtaining unit, configured to obtain a template model of the target object, where the template model is a model describing standard target object point cloud data of the target object in a preset standard posture;
a determining unit, configured to determine a point correspondence between the target object point cloud data obtained by the first obtaining unit and the template model obtained by the second obtaining unit;
an estimation unit, configured to estimate, based on a skeleton-driven deformation technology and the point correspondence determined by the determining unit, a posture change parameter of the target object point cloud data that is relative to the template model determined by the second obtaining unit and that is determined by the first obtaining unit; and
a first deformation unit, configured to deform, by using the posture change parameter that is of the target object point cloud data relative to the template model and that is estimated by the estimation unit, the template model into the first reconstruction model with a same posture as the target object point cloud data.

With reference to the second aspect, or the first or the second possible implementation of the second aspect, in a fourth possible implementation of the second aspect, the first obtaining module includes:

a first obtaining unit, configured to obtain target object point cloud data of the target object;
a second obtaining unit, configured to obtain a template model of the target object, where the template model is a model describing standard target object point cloud data of the target object in a preset standard posture;
a determining unit, configured to determine a point correspondence between the target object point cloud data obtained by the first obtaining unit and the template model obtained by the second obtaining unit;
an estimation unit, configured to estimate, based on a skeleton-driven deformation technology and the point correspondence determined by the determining unit, a posture change parameter of the target object point cloud data that is relative to the template model determined by the second obtaining unit and that is determined by the first obtaining unit;

a second deformation unit, configured to deform, by using the posture change parameter that is of the target object point cloud data relative to the template model and that is estimated by the estimation unit, the template model into a skeleton deformation model with a same posture as the target object point cloud data, so that the skeleton deformation model is aligned with the target object point cloud data; and

a third deformation unit, configured to deform, based on a mesh deformation technology, the skeleton deformation model obtained by the second deformation unit, to obtain the first reconstruction model, so that the first reconstruction model matches a shape of the target object point cloud data.

With reference to any one of the second aspect or the first to the fourth possible implementations of the second aspect, in a fifth possible implementation of the second aspect, the second obtaining module includes:

a third obtaining unit, configured to obtain N target object sample models from a preset target object database;

a fourth deformation unit, configured to deform, based on the skeleton-driven deformation technology and according to the posture parameter of the first reconstruction model, the N target object sample models obtained by the third obtaining unit into N target object sample skeleton deformation models corresponding to the same posture parameter as the first reconstruction model;

a division unit, configured to divide each target object sample skeleton deformation model obtained by the fourth deformation unit into M local blocks, where the $i^{th}$ local block of each target object sample skeleton deformation model and the $i^{th}$ local block of the first reconstruction model are corresponding to a part that is of the target object and is represented by a same part name; and

a fourth obtaining unit, configured to perform at least one change of rotation, translation, or scaling on the $i^{th}$ local block that is of each target object sample skeleton deformation model and that is obtained by the division unit, to obtain the N target object sample alignment models, where after the at least one change of rotation, translation, or scaling, the $i^{th}$ local block of each target object sample alignment model is aligned with the $i^{th}$ local block of the first reconstruction model, and i is 1, 2, ..., or M.

With reference to any one of the second aspect or the first to the fifth possible implementations of the second aspect, in a sixth possible implementation of the second aspect, the apparatus further includes:

an optimization module, configured to perform smooth optimization processing on the second reconstruction model.

Based on the foregoing technical solutions, according to the data processing method and apparatus in the embodiments of the present invention, a first reconstruction model of a target object is divided into M local blocks, and N target object sample alignment models are approximated to the first reconstruction model, to determine a second reconstruction model that is of the target object and includes M local blocks, where the $i^{th}$ local block of the second reconstruction model is determined according to the $i^{th}$ local block of each target object sample alignment model. With the method in the embodiments of the present invention, model accuracy can be effectively improved.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 shows a schematic flowchart of a data processing method according to an embodiment of the present invention;

FIG. 2 shows a schematic diagram of a human body model in an embodiment of the present invention;

FIG. 3 shows a schematic diagram of a data processing method according to an embodiment of the present invention;

FIG. 4 shows another schematic diagram of a data processing method according to an embodiment of the present invention;

FIG. 5 shows a schematic block diagram of a data processing apparatus according to an embodiment of the present invention; and

FIG. 6 shows another schematic block diagram of a data processing apparatus according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

An embodiment of the present invention provides a data processing method, which is specifically a method for determining a reconstruction model of a target object. The target object may be a human body, or may be an animal or another dynamic object.

In the following, for the ease of understanding and description, the target object being a human body is used as an example for illustration purposes instead of limitation.

To help understand a data processing solution provided in the embodiment of the present invention, the following concept is explained first:

Kinect RGB-D cameras:

In most human body modeling systems, a series of cameras or a three-dimensional scanning technology (for example, a laser camera and a structured-light camera) are used to collect depth image data. However, the application of these modeling systems is limited by expensive devices and complex cumbersome user interaction interfaces. The Kinect RGB-D cameras released by Microsoft are at low prices and easy to operate, and therefore have been widely applied in the human body modeling systems.

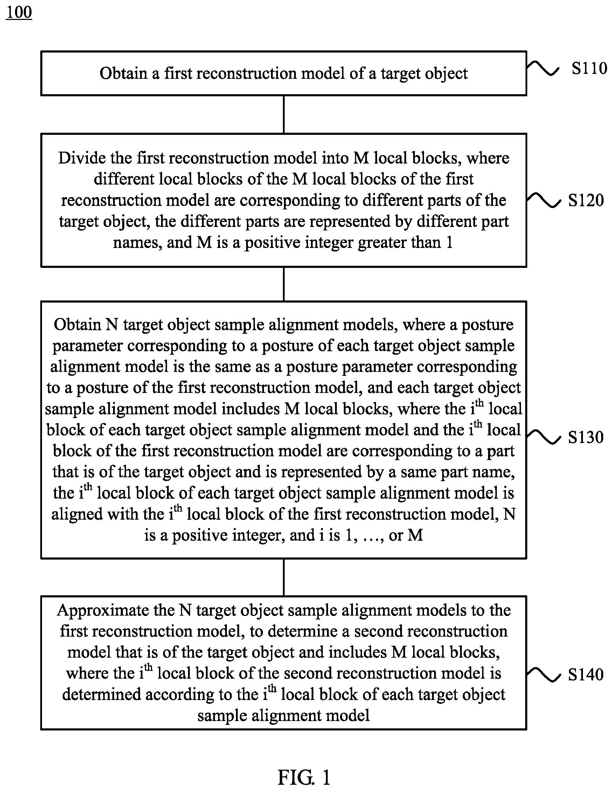

In the data processing method provided in this embodiment of the present invention, a Kinect RGB-D camera is used to collect depth image data of a human body, so as to obtain human body point cloud data of the human body. For example, one or more Kinect RGB-D cameras are fixed near the human body to simultaneously capture a depth image data sequence of the human body. A human body model (which is corresponding to a second reconstruction model in a flowchart shown in FIG. 1) at a time point (a current frame) is built by using depth image data collected at the time point, so as to implement dynamic human body modeling in an entire time period.

Optionally, in this embodiment of the present invention, one or more Kinect RGB-D cameras are used to collect the human body depth image data.

For the ease of understanding and description, the following describes a human body modeling process of the current frame.

FIG. 1 shows a schematic flowchart of a data processing method 100 according to an embodiment of the present invention. The method 100 includes the following steps.

S110. Obtain a first reconstruction model of a target object.

Specifically, the first reconstruction model may be a model that is reconstructed based on the human body point cloud data and that is used to describe human body point cloud data of a human body. The human body point cloud data is a data point extracted from depth image data of the human body. In the following Sill, a process of extracting the human body point cloud data is described. The first reconstruction model is specifically a model determined after a human body sample model in a preset human body database is aligned with the human body point cloud data of the human body. Alignment herein means that the first reconstruction model has a point alignment relationship with the human body point cloud data. Specifically, each vertex included in the first reconstruction model is corresponding to a point in the human body point cloud data of the human body, and two points of each pair of corresponding points are nearest adjacent points.

Because the human body point cloud data is data collected based on the depth image data of the human body captured by a camera, the human body point cloud data generally includes strong noise, and the first reconstruction model obtained based on the human body point cloud data also includes noise, resulting in relatively low model precision. The first reconstruction model needs to be further processed, so as to improve the model precision.

S120. Divide the first reconstruction model into M local blocks, where different local blocks of the M local blocks of the first reconstruction model are corresponding to different parts of the target object, the different parts are represented by different part names, and M is a positive integer greater than 1.

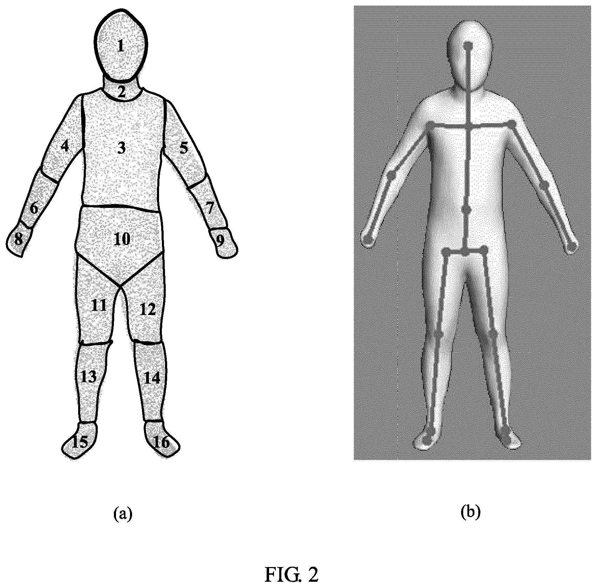

Specifically, for example, the first reconstruction model is a human body model shown in FIG. 2(a). The model is divided into 16 local blocks, and the local blocks are corresponding to different parts of the human body, the different parts are represented by different part names, and as shown in FIG. 2(a), the different local blocks are represented by a series of numbers.

S130. Obtain N target object sample alignment models, where a posture parameter corresponding to a posture of each target object sample alignment model is the same as a posture parameter corresponding to a posture of the first reconstruction model, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M, where i being 1, ..., and M means that assigned values of i are sequentially 1, ..., and M.

Specifically, for example, the target object is the human body. The target object sample alignment model is a human body sample alignment model, which specifically is a model resulting from performing some processing on a standard human body sample model in the preset human body database. For example, the human body sample model undergoes a posture change, so that a posture parameter corresponding to the human body sample model resulting from the posture change (that is, the human body sample alignment model) is the same as that corresponding to the first reconstruction model of the human body, that is, the human body sample model resulting from the posture change and the first reconstruction model have a same posture. For example, if a posture of the first reconstruction model of the human body is squatting, the human body sample alignment model also has the squatting posture. This helps to ensure a constraint on boundary consistency in a subsequent model reconstruction process.

That the $i^{th}$ local block of each human body sample alignment model and the $i^{th}$ local block of the first reconstruction model are corresponding to a part represented by a same part name, of the human body means: If the first reconstruction model of the human body is divided into 16 local blocks, as shown in FIG. 2(a), the human body sample alignment model is also divided into 16 local blocks shown in FIG. 2(a), and the $i^{th}$ local block of the human body sample alignment model and the $i^{th}$ local block of the first reconstruction model indicate the same part of the human body, and for example, both the $i^{th}$ local block of the human body sample alignment model and the $i^{th}$ local block of the first reconstruction model are corresponding to a local block 3 shown in FIG. 2(a).

As for that the $i^{th}$ local block of each human body sample alignment model is aligned with the $i^{th}$ local block of the first reconstruction model, the alignment is: No rigid transformation is needed between the $i^{th}$ local block of each human body sample alignment model and the $i^{th}$ local block of the first reconstruction model to implement alignment between each other, that is, the $i^{th}$ local block of each human body sample alignment model and the $i^{th}$ local block of the first reconstruction model are in a same coordinate system.

S140. Approximate the N target object sample alignment models to the first reconstruction model, to determine a second reconstruction model that is of the target object and includes M local blocks, where the $i^{th}$ local block of the second reconstruction model is determined according to the $i^{th}$ local block of each target object sample alignment model, and i is 1, ..., or M, where i being 1, ..., and M means that assigned values of i are sequentially 1, ..., and M.

Specifically, for example, the target object is the human body. The $i^{th}$ local block of the second reconstruction model is determined according to a linear combination of the $i^{th}$ local block of each human body sample alignment model, and the linear combination of the $i^{th}$ local block of each human body sample alignment model is determined in a process of approximating the N human body sample alignment models to the first reconstruction model. Details are provided in the following with reference to formulas (3) to (6).

Therefore, according to the data processing method in this embodiment of the present invention, a first reconstruction model of a human body is divided into M local blocks, and N human body sample alignment models are approximated to the first reconstruction model, to determine a second reconstruction model including M local blocks, of the human body, where the $i^{th}$ local block of the second reconstruction model is determined according to the $i^{th}$ local block of each human body sample alignment model. With the method in this embodiment of the present invention, model accuracy can be effectively improved.

According to the method in this embodiment of the present invention, the second reconstruction model of the human body is determined based on a combination of the N human body sample alignment models, and the combination of the N human body sample alignment models is determined by means of approximating the N human body sample alignment models to the first reconstruction model. The second reconstruction model obtained in this way both restores the first reconstruction model of the human body in a relatively close similarity and keeps smoothness and accuracy of the human body sample model, so as to eliminate noise that may be included in the first reconstruction model, to a relatively great extent. Therefore, with the data processing method in this embodiment of the present invention, the model accuracy can be effectively improved.

It should be understood that a single human body part has smaller posture change space than the entire human body. In this embodiment of the present invention, the $i^{th}$ local block of the second reconstruction model is determined according to the $i^{th}$ local block of each human body sample alignment model. In this embodiment of the present invention, the second reconstruction model approximating to the first reconstruction model to a relatively great extent can be obtained based on a relatively small-scale human body sample database. Therefore, the data processing method in this embodiment of the present invention can effectively improve the model accuracy, and can reduce requirements on a quantity of models and posture changes in a human body sample database, and therefore is to be applied more widely in future.

Optionally, in this embodiment of the present invention, the obtaining a first reconstruction model of a target object in S110 includes the following steps.

Sill. Obtain target object point cloud data of the target object.

For example, the target object is the human body, and specifically, two steps of collecting a depth image of the human body and extracting human body point cloud data are included.

1. Collect the depth image of the human body.

In the following, two RGB-D cameras are used as an example for illustration purposes instead of limitation.

The two RGB-D cameras are fixed in front of and behind the to-be-photographed human body, respectively, so that the two cameras can photograph the entire human body. For example, the cameras in front and behind each are about 2.5 m to 3 m away from the human body. This is not limited in this embodiment of the present invention.

The two cameras may be set to collect data synchronously. Specifically, intrinsic parameters of the RGB-D cameras and extrinsic parameters between the two RGB-D cameras may be estimated according to a standard procedure, so that the two cameras collect data at a same time. After the camera calibration, two depth images collected by the two cameras at a same time point may be aligned in a same coordinate system.

In a process of depth image collection, the photographed human body may have different postures.

After a period of consecutive photographing, the two cameras collect two depth image synchronization sequences of dynamic human body changes.

It should be understood that, alternatively, three RGB-D cameras may be used to collect the depth image data. For example, two cameras capture the upper and lower parts of the human body, and the other camera captures the middle part in an opposite direction. Perspectives of all the Kinect cameras do not overlap, so as to avoid mutual infrared interference and a data loss.

2. Extract the human body point cloud data.

A. Detect the ground by using a plane detection method, and delete a ground part from the depth image.
B. Define a three-dimensional bounding box that can enclose the entire human body, and delete another part from the depth image except the three-dimensional bounding box.
C. Delete a remaining point of the ground by using a statistical method.
D. Determine a pixel range of the human body in the current frame by using an extraction result of human body point cloud data of a previous frame as prior knowledge, and delete an unnecessary point, to obtain the final human body point cloud data of the current frame.

It should be understood that in a process of extracting the human body point cloud data of the first frame, step D is omitted.

S112. Obtain a template model of the target object, where the template model is a model describing standard target object point cloud data of the target object in a preset standard posture.

For example, the target object is the human body. The preset standard posture is a standard standing posture of the human body, and specifically, the preset standard standing posture of the human body is a standard standing posture specified in the human body database.

First, standard human body point cloud data of the human body in the preset standard standing posture of the human body is obtained. Then, any human body sample model in the human body database is aligned with the standard human body point cloud data of the human body. A model resulting from performing the alignment step on the human body sample model is the template model of the human body. Each vertex of the template model is corresponding to a point in the standard human body point cloud data, and two points of each pair of corresponding points are nearest adjacent points.

That is, the template model is a deformed model obtained by aligning the human body sample model in the human body database with the standard human body point cloud data of the human body. The obtaining the template model mainly includes the following two steps.

Step one. Establish a correspondence between sparse points.

The standard human body point cloud data of the human body in the preset standard standing posture of the human body is obtained. It is assumed that a sample model A in the human body database is used as a base model of the template model.

The sample model A and the standard human body point cloud data of the human body are downsampled. For example, the sample model A is initially aligned with the standard human body point cloud data by using an alignment method provided in the literature "Point Set Registration: Coherent Point Drift. Andriy Myronenko, etc. PAMI 2010." Specifically, for example, the standard human body point cloud data or the sample model A undergoes at least one change of translation, rotation, or scaling, so that finally, there are as many data points as possible in the standard human body point cloud data aligning with a vertex of the sample model A, and the data points and the vertex overlap as much as possible.

Corresponding points between the initially aligned sample model A and the standard human body point cloud data are determined according to the initially aligned sample model A and the standard human body point cloud data. For example, for the vertex a1 of the sample model A resulting from the alignment with the standard human body point cloud data, a nearest point is found in an entire human body point cloud based on three-dimensional distances and is used as a corresponding point p1 of the vertex a1 of the standard human body point cloud data.

Based on these correspondences between sparse points, for example, (a1, p1), the sample model A is initially aligned with the standard human body point cloud data. Specifically, the sample model A undergoes at least one change of translation, rotation, or scaling, so that the sample model A is initially aligned with the standard human body point cloud data. For the ease of understanding and description, the sample model A deformed by means of the foregoing initial alignment is referred to as a sample model A'.

Step two. Establish a correspondence between dense points.

Dense corresponding points are determined between the sample model A' and the standard human body point cloud data according to the sample model A' and the standard human body point cloud data by using a method for finding a corresponding nearest adjacent point. Based on the dense corresponding points, the sample model A' is further aligned with the standard human body point cloud data. Specifically, the sample model A' undergoes at least one change of translation, rotation, or scaling, so that the sample model A' is further aligned with the standard human body point cloud data.

A deformed model resulting from performing the foregoing second alignment on the sample model A' is determined as the template model of the human body. That is, the template model more accurately describes the standard human body point cloud data of the human body in the standard standing posture.

It should be understood that when the corresponding points are determined by using the nearest neighbor method, if normal vectors of two points form an angle less than 90 degrees and are less than 0.1 m apart, the corresponding point found by using the nearest neighbor method is proper. Using a determining condition for the angle between the normal vectors is to avoid incorrect match between a point on a front surface and a point on the back surface.

It should be understood that by using the foregoing two steps of establishing correspondences between points, the template model that has a point correspondence with the standard human body point cloud data in the standard standing posture is obtained.

It should be understood that the foregoing process of determining the template model may be considered as: a process of continuously deforming the sample model A in the human body database toward the standard human body point cloud data in the standard standing posture, so as to align the deformed sample module A with the standard human body point cloud data as much as possible, and finally generate a human body model matching the human body point cloud in the standard standing posture, that is, the template model.

S113. Determine a point correspondence between the target object point cloud data and the template model.

Specifically, the point correspondence between the human body point cloud data and the template model may be determined by using an alignment method provided in the literature "Point Set Registration: Coherent Point Drift. Andriy Myronenko, etc. PAMI 2010." For example, a corresponding point of a vertex a2 of the template model in the human body point cloud data is p2, and the pair of corresponding points (a2, p2) are nearest adjacent points.

For example, the point correspondence between the template model and the human body point cloud data of the current frame may alternatively be established by referring to the first reconstruction model of the previous frame.

It should be understood that, alternatively, another alignment method may be used to determine the point correspondence between the human body point cloud data and the template model. This is not limited in this embodiment of the present invention.

S114. Estimate, based on a skeleton-driven deformation technology and the point correspondence, a posture change parameter of the target object point cloud data relative to the template model.

S115. Deform, by using the posture change parameter of the target object point cloud data relative to the template model, the template model into the first reconstruction model with a same posture as the target object point cloud data.

Specifically, the skeleton-driven technology uses a skeletal motion model (Skeletal Motion Model) to represent a movement of the human body, and implements smooth human body deformation based on almost rigid movement characteristics of each small part of the human body and by using skinning weight (Skinning Weight) and linear blend skinning (Linear Blend Skinning) technologies. The skeletal motion model includes a mesh human body model and a human body skeleton embedded in the model. The human body skeleton includes some joints (Joint) and bones (Bone). A connection between joints is orderly and may be represented by using a tree structure. A rotation axis is defined for each joint, and a bone connecting to the joint may arbitrarily rotate around the rotation axis of the joint. A movement of the bone is affected by movements of all joints in an entire chain (Kinematic Chain) from a root joint to the joint connected to the bone. A movement of each vertex of the template model may be expressed by using a linear combination of rigid movements of all the bones of the human body skeleton. A correlation between the movement of each vertex of the template model and the movement of each bone of the human body skeleton is represented by using a skinning weight (Skinning Weight). For a specific method, refer to an existing method in "Baran, etc, Automatic rigging and animation of 3d characters. SIGGRAPH 2007, page 72."

Specifically, FIG. 2(b) shows a schematic diagram of a skeleton movement model. The skeleton movement model includes 22 joints, and a joint angle $\theta_n$, that is, an angle by which the bone rotates around the joint rotation axis, is defined for each joint. Overall rigid transformation of the skeleton movement model is represented by a parameter $\theta_0\hat{\xi}$. A skeleton posture of the skeleton movement model may be represented by a vector $\chi=(\theta_0\hat{\xi}, \theta_1,..., \theta_n)$, and degrees of freedom of the skeleton posture are 22 + 6 = 28.

Optionally, in this embodiment of the present invention, the posture change parameter of the target object point cloud data relative to the template model and the first reconstruction model with the same posture as the target object point cloud data are estimated according to the following formulas:

$$q_i(\chi) = \sum_{g=1}^{R}\left( w_i^g \prod_{j=0}^{j_g} \exp\left(\theta_{\varphi_g(j)}\hat{\xi}_{\varphi_g(j)}\right)\right)q_i' \qquad (1),$$

and

$$E(\chi) = Min \sum_{(q_i,p_i)\in C} \left\| q_i(\chi) - p_i \right\|^2 \qquad (2),$$

where $q_i(\chi)$ is the ith vertex of the first reconstruction model, $q_i'$ is the ith vertex of the template model, $R$ is a total quantity of bones included in the skeleton model using the skeleton-driven technology, $w_i^g$ is a movement weight of a bone $g$ for the ith vertex of the template model, $j_g$ is a quantity of joints in the skeleton model that affect a movement of the bone $g$, $\varphi_g(j)$ is an index of the jth joint in the skeleton model that affects the bone $g$, $\exp(\theta_{\varphi_g(j)}\hat{\xi}_{\varphi(j)})$ is a rigid transformation matrix of the jth joint, $C$ is a set of corresponding points between the first reconstruction model and the human body point cloud data, and $(v_i,p_i)$ is a pair of corresponding points in the set $C$ of the corresponding points between the first reconstruction model and the human body point cloud data.

It should be understood that in this embodiment of the present invention, the posture change parameter of the human body point cloud data relative to the template model is corresponding to the skeleton posture vector $\chi=(\theta_0\hat{\xi}, \theta_1,..., \theta_n)$ in the formulas (1) and (2).

Specifically, multiple optimization iterations, for example, eight optimization iterations, are performed based on the formulas (1) and (2), so that the first reconstruction model resulting from deforming the template model has a better alignment relationship with the human body point cloud data of the current frame. Optionally, a Levenberg-Marquardt algorithm may be used to perform optimization iterations.

More specifically, in the multiple optimization iterations, a skeleton posture $\chi^{t-1}$ of the previous frame and corresponding points between the first reconstruction model of the previous frame and the human body point cloud data of the current frame may be used as an initial iterative condition, so as to finally obtain a skeleton posture $\chi^t$ of the current frame.

To sum up, the posture change parameter of the human body point cloud data relative to the template model, that is, the skeleton posture vector $\chi$ in the formulas (1) and (2), may be estimated by means of the multiple iterations based on the formulas (1) and (2). Then, the skeleton posture vector $\chi$ is substituted into the formula (1), coordinates (corresponding to $q_i(\chi)$ in the formula (1)) of each vertex of the first reconstruction model may be obtained through calculation, and the first reconstruction model is obtained.

It should be understood that a posture parameter of the first reconstruction model may be determined by using the posture change parameter (corresponding to the skeleton posture vector $\chi=(\theta_0\hat{\xi}, \theta_1,..., \theta_n)$ in the formulas (1) and (2)) that is of the human body point cloud data relative to the template model and that is estimated in S114. Specifically, the posture change parameter (corresponding to the skeleton posture vector $\chi=(\theta_0\hat{\xi} \theta_1,...,\theta_n)$ in the formulas (1) and (2)) is determined as the posture parameter of the first reconstruction model. That is, the posture parameter of the first reconstruction model describes a posture change of the first reconstruction model relative to the template model.

To better reflect deformation of human body details, for example, local deformation and detail deformation of a limb, detail deformation may be further implemented based on the skeleton-driven deformation, so that the resulting first reconstruction model is truer to the actual human body.

Optionally, in this embodiment of the present invention, the obtaining a first reconstruction model of a target object in S110 includes the following steps.

Sill. Obtain target object point cloud data of the target object.

A specific process is the same as the above, and for brevity, details are not repeated herein.

S112. Obtain a template model of the target object, where the template model is a model describing standard target object point cloud data of the target object in a preset standard posture.

A specific process is the same as the above, and for brevity, details are not repeated herein.

S113. Determine a point correspondence between the target object point cloud data and the template model.

A specific process is the same as the above, and for brevity, details are not repeated herein.

S114. Estimate, based on a skeleton-driven deformation technology and the point correspondence, a posture change parameter of the target object point cloud data relative to the template model.

S115A. Deform, by using the posture change parameter of the target object point cloud data relative to the template model, the template model into a skeleton deformation model with a same posture as the target object point cloud data, so that the skeleton deformation model is aligned with the target object point cloud data.

Specifically, the posture change parameter (corresponding to the skeleton posture vector $\chi=(\theta_0\hat{\xi}, \theta_1,..., \theta_n)$ in the formulas (1) and (2)) of the human body point cloud data relative to the template model is estimated by means of the multiple iterations based on the formulas (1) and (2). $q_i(\chi)$ in the formula (1) is considered as the ith vertex of the skeleton deformation model.

Then, the skeleton posture vector $\chi$ is substituted into the formula (1), the coordinates (corresponding to $q_i(\chi)$ in the formula (1)) of each vertex of the first reconstruction model may be obtained through calculation, coordinates (corresponding to $q_i(\chi)$ in the formula (1)) of each vertex of the skeleton deformation model is obtained, and the skeleton deformation model is obtained.

S115B. Deform, based on a mesh deformation technology, the skeleton deformation model, to obtain the first reconstruction model, so that the first reconstruction model matches a shape of the target object point cloud data.

Specifically, an affine transformation $X_i$ is assigned to each vertex of the skeleton deformation model, the affine transformation $X_i$ is used to transform each vertex of the skeleton deformation model to a corresponding point of the vertex of the human body point cloud. Transformations of all the vertexes are integrated, to obtain a 4$n$*3 matrix. An energy function for the deformation is as follows:

$$E(X) = \left\| W(DX - U) \right\|_F^2 + \alpha \sum_{i,j \in \varepsilon} \left\| X_i - X_j \right\|_F^2 \tag{3},$$

where $X$ is a matrix including the transformation of each vertex, $D$ is a matrix including coordinates of each vertex before the deformation, $U$ is a coordinate matrix of a corresponding point in the human body point cloud, $W$ is a weight matrix including a weight value of each corresponding point, $\varepsilon$ is a set of all sides of the skeleton deformation model, $i, j$ are indexes of two vertexes of a side (a connection between any two adjacent vertexes of the skeleton deformation model is referred to as a side) of the skeleton deformation model, and $\alpha$ is a smoothness term weight.

The first term in the formula (3) is a data term, representing that a distance between the vertex of the skeleton deformation model resulting from the deformation and the corresponding point in the human body point cloud data is as short as possible. The second term in the formula (3) is a smoothness term, representing that transformations of two vertexes of a side need to be similar, to make overall deformation smooth.

In the foregoing detail deformation process, the smoothness term weight is initially set to a large value, and as a quantity of iteration times gradually decreases, this manner helps to reduce impact of strong noise in input data on deformation as much as possible.

Specifically, the energy function in the formula (3) is solved by using a least squares method.

In this embodiment of the present invention, the first reconstruction model of the current frame results from sequentially performing skeleton-driven deformation and detail deformation on the template model of the human body, so as to better reflect deformation of human body details, for example, local deformation and detail deformation of a limb, and to make the resulting first reconstruction model truer to the actual human body.

In this embodiment of the present invention, alternatively, existing point alignment and deformation methods may be used, for example, the first reconstruction model of the human body point cloud data is obtained by using existing skeleton alignment, coarse alignment, and fine alignment. Alternatively, the first reconstruction model of the previous frame is aligned with the human body point cloud data of the current frame based on the skeleton-driven deformation method, and then, detail deformation is implemented by using Laplacian deformation, to obtain the first reconstruction model of the current frame.

In S120, the first reconstruction model is divided into the M local blocks, where the different local blocks of the M local blocks of the first reconstruction model are corresponding to the different parts of the target object, the different parts are represented by the different part names, and M is a positive integer greater than 1.

Specifically, for example, as shown in FIG. 2(a), it is assumed that the first reconstruction model is the human body model shown in FIG. 2(a). The first reconstruction model is divided into 16 local blocks according to human body skeletal and movement characteristics, and adjacent local blocks have a common boundary vertex at a junction, for example, a right palm 9 and a right forearm 7 share a boundary vertex at a junction of the right palm and the right forearm. This can avoid adjacent block boundary inconsistency in a subsequent model reconstruction process. Optionally, the first reconstruction model may be divided into M parts according to statuses of bones of the skeleton model.

Optionally, in this embodiment of the present invention, adjacent local blocks of the M local blocks of the first reconstruction model have a common boundary vertex at a junction.

Specifically, it is assumed that the first reconstruction model is the human body model shown in FIG. 2(a). If the $i^{th}$ local block (for example, the right palm 9) and the $j^{th}$ local block (for example, the right forearm 7) of the M local blocks are adjacent local blocks, a circle of boundary vertexes at the junction (for example, a right wrist) of the right palm 9 and the right forearm 7 are vertexes belonging to both the $i^{th}$ local block (the right palm 9) and the $j^{th}$ local block (the right forearm 7). That is, the $i^{th}$ local block (the right palm 9) and the $j^{th}$ local block (the right forearm 7) have the common boundary vertexes (that is, vertexes in the right wrist) at the junction.

The first reconstruction model is divided into the M local blocks, and the adjacent local blocks have the common boundary vertex at the junction. This helps to keep boundary consistency in a subsequent local block reconstruction step, so as to further improve model accuracy.

In S130, the N target object sample alignment models are obtained, where the posture parameter corresponding to the posture of each target object sample alignment model is the same as the posture parameter corresponding to the posture of the first reconstruction model, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M, where i being 1, ..., and M means that assigned values of i are sequentially 1, ..., and M.

The human body sample alignment model may be preset by a system, or may be obtained after a related processing operation is performed in real time on the standard human body sample model in the human body database. Details are provided in the following.

Optionally, in this embodiment of the present invention, the obtaining N human body sample alignment models in S130 includes the following steps.

S131. Obtain N target object sample models from a preset target object database.

Specifically, the human body standard database in this embodiment of the present invention may include 190 (that is, N is equal to 190) human body models in the standard standing posture, and each human body model includes 9999 vertexes and 19994 triangular facets.

S132. Deform, based on the skeleton-driven deformation technology and according to the posture parameter of the first reconstruction model, the N target object sample models into N target object sample skeleton deformation models corresponding to the same posture parameter as the first reconstruction model.

Specifically, the N human body sample models are deformed into the N human body sample skeleton deformation models by using a posture change parameter (corresponding to the skeleton posture $\chi$ determined based on the formulas (1) and (2)) that is of the current frame and that is determined in the skeleton-driven deformation process. The human body sample skeleton deformation model has a same posture as the first reconstruction model (or the human body point cloud data).

S133. Divide each target object sample skeleton deformation model into M local blocks, where the $i^{th}$ local block of each target object sample skeleton deformation model and the $i^{th}$ local block of the first reconstruction model are corresponding to a part that is of the target object and is represented by a same part name.

Specifically, the N human body sample skeleton deformation models resulting from the posture change each are divided into the M local blocks, and adjacent local blocks of the M local blocks have a common boundary vertex at a junction.

S134. Perform at least one change of rotation, translation, or scaling on the $i^{th}$ local block of each target object sample skeleton deformation model, to obtain the N target object sample alignment models, where after the at least one change of rotation, translation, or scaling, the $i^{th}$ local block of each target object sample alignment model is aligned with the $i^{th}$ local block of the first reconstruction model, and i is 1, 2, ..., or M.

Specifically, by using an existing Procrustes analysis method (for example, "D. G. Kendall, 'A survey of the statistical theory of shape,' Statistical Science, vol. 4, no. 2, pp. 87-99, 1989."), a parameter about rigid transformation from the $i^{th}$ local block of the M local blocks of each human body sample skeleton deformation model of the N human body sample skeleton deformation models to the $i^{th}$ local block of the first reconstruction model is estimated; according to the rigid transformation parameter, the $i^{th}$ local block of each human body sample skeleton deformation model is aligned with the $i^{th}$ local block of the first reconstruction model by performing the at least one change of rotation, translation, or scaling on the $i^{th}$ local block of each human body sample skeleton deformation model of the N human body sample skeleton deformation models, to obtain the N human body sample alignment models. The step S134 may be also referred to as a local block alignment step.

It should be understood that the N human body sample alignment models obtained according to the local block alignment step of S134 eliminates rigid transformation between the human body sample alignment models and the first reconstruction model to a relatively great extent. Therefore, in S140, the human body sample alignment models can well express the first reconstruction model.

In S140, the N target object sample alignment models are approximated to the first reconstruction model, to determine the second reconstruction model including the M local blocks, of the target object, where the $i^{th}$ local block of the second reconstruction model is determined according to the $i^{th}$ local block of each target object sample alignment model, and i is 1, ..., or M. A specific process is as follows:

obtaining the second reconstruction model according to the following formula:

$$K_i = B_i c_i + \mu_i \qquad \left( i = 1,...,M \right) \tag{4},$$

where $K_i$ is the $i^{th}$ local block of the M local blocks of the second reconstruction model, $B_i$ is a basis including the $i^{th}$ local blocks of the N target object sample alignment models, $\mu_i$ is an average value of vertex coordinates of the $i^{th}$ local blocks of the N target object sample alignment models, and $c_i$ is a coefficient vector of $B_i$, where a formula for obtaining $c_i$ includes:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 \right)$$
$$s.t. \quad c_i > 0 \qquad \left( i = 1,...,M \right) \tag{5}$$

or

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j)\in\Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$
$$s.t. \quad c_i > 0 \qquad \left( i = 1,...,M \right) \tag{6}$$

where $\mathbf{C} = \left( c_1^T, c_2^T, ..., c_M^T \right)^T$, $V_i$ is the $i^{th}$ local block of the first reconstruction model, $\Gamma$ is a set of adjacent local blocks of the M local blocks of each target object sample alignment model, $(i, j) \in \Gamma$ represents that the $j^{th}$ local block of each target object sample alignment model is a local block adjacent to the $i^{th}$ local block of each target object sample alignment model, $B_j$ is a basis including the $j^{th}$ local blocks of the target object sample alignment models, $B_{ij}$ is used to represent a boundary vertex at a junction of the $i^{th}$ local block and the $j^{th}$ local block of each target object sample alignment model, $B_{ij}$ is a subset of $B_i$, $\mu_{ij}$ is an average value of $B_{ij}$, $B_{ji}$ is used to represent a boundary vertex at a junction of the $j^{th}$ local block and the $i^{th}$ local block of each target object sample alignment model, $B_{ji}$ is a subset of $B_j$, $\mu_{ji}$ is an average value of $B_{ji}$, $\beta$ is a weight, $\lambda$ is a weight, $\| \|_1$ is an L1 norm, and $\| \|_2$ is an L2 norm.

It can be learned from the above that the first term in the formula (5) represents that linear expression of each local block of each human body sample alignment model is similar to a corresponding local block of the first reconstruction model. That is, an approximation degree of the linear combination of the $i^{th}$ local block of each human body sample alignment model to the $i^{th}$ local block of the first reconstruction model meets a preset condition. Specifically, the preset condition may be determined according to an indicator for a model accuracy requirement.

It should be understood that a single human body part has smaller posture change space than the entire human body. Therefore, more accurate linear expression of each local block in the first reconstruction model can be implemented by using a relatively small-scale human body sample database, so that this embodiment of the present invention can reduce requirements on a quantity of human body models and posture changes in a human body sample database, and therefore is to be applied more widely in future.

The second term in the formula (5) is a boundary constraint, representing that expression results of the common boundary vertex of the two adjacent local blocks are similar in the two local blocks.

Specifically, if the ith and the jth local blocks of the M local blocks included in a human body sample skeleton deformation model model 1 are adjacent local blocks, that is, the ith and the jth local blocks have common boundary vertexes G at the junction. That is, the common boundary vertexes G have same coordinates (or a position expression parameter) in both the ith and the jth local blocks. According to the local block alignment step of S134, that is, after the at least one change of rotation, translation, or scaling, each local block of the human body sample skeleton deformation model model 1 is aligned with the corresponding local block of the first reconstruction model, a model resulting from the local block alignment step is referred to as a human body sample alignment model model 2. In the human body sample alignment model model 2, the ith and the jth local blocks of the M local blocks included in the model 2 may be disconnected from each other, for example, break apart from each other, because of the at least one change of rotation, translation, or scaling. Therefore, the previous common boundary vertexes G are boundary vertexes G1 in the ith local block and boundary vertexes G2 in the jth local block, and coordinates (or a position expression parameter) of the boundary vertexes G1 in the ith local block are different from coordinates (or a position expression parameter) of the boundary vertexes G1 in the jth local block, and similarly, coordinates (or a position expression parameter) of the boundary vertexes G2 in the ith local block are different from coordinates (or a position expression parameter) of the boundary vertexes G2 in the jth local block. This is unhelpful for the boundary consistency in the local block reconstruction process.

The second term in the formula (5) is to resolve the foregoing problem. The second term in the formula (5) is the boundary constraint, representing that the expression results of the common boundary vertex of the two adjacent local blocks are similar in the two adjacent local blocks. That is, the expression results of the common boundary vertex of the two adjacent local blocks in the two adjacent local blocks should meet a preset condition, and the preset condition may be specifically determined according to a specific model accuracy requirement.

The constraint represented by the second term in the formula (5) effectively resolves the boundary inconsistency problem in the local block alignment process.

It can be further learned from the formula (5) that the coefficient vector $c_i$ of $B_i$ is greater than 0 (that is, each element of the coefficient vector $c_i$ is positive), that is, meeting a coefficient positive constraint condition, so as to improve robustness to strong noise.

In this embodiment of the present invention, with reference to the formula (4) and the formula (5), the first reconstruction model and the second reconstruction model are determined according to the linear expression of the M local blocks. This can effectively improve the model accuracy and can also reduce requirements on a quantity of models and model postures in a human body sample database. Therefore, the data processing method is to be applied more widely in future.

In addition to determining the coefficient vector $c_i$ of $B_i$ according to the formula (5), the coefficient vector $c_i$ of $B_i$ may be determined according to the formula (6).

Similar to the formula (5), the first term in the formula (6) represents that linear expression of each local block of each human body sample alignment model is similar to a corresponding local block of the first reconstruction model. The second term is a boundary constraint, representing that expression results of the common boundary vertex of the two adjacent local blocks are similar in the two local blocks. The coefficient vector $c_i$ of $B_i$ is greater than 0, that is, meeting a coefficient positive constraint condition. Different from the formula (5), the formula (6) further includes the third term. The third term represents a sparse coefficient constraint condition in linear expression (that is, there are as many elements of the coefficient vector $c_i$ as possible that are equal to 0). It should be understood that a positive coefficient constraint and the sparse coefficient constraint can improve robustness to strong noise.

This part is about a local block-based global reconstruction algorithm based on a basic idea of sparse coding. A sparse coding problem may be expressed by using the following formula:

$$\underset{c_i}{Min}\left\|Ac - b\right\|_2^2 + \lambda\left\|c_i\right\|_1, s.t. \quad c > 0$$

$$\mathbf{C} = \left(c_1^T, c_2^T, ..., c_M^T\right)^T$$

$$(7)$$

The formula (5) may be solved by using an L1-minimization method.

Generally, extracted human body point cloud data includes noise, and therefore, the corresponding first reconstruction model also includes noise. According to the local block-based human body modeling method in this embodiment of the present invention, by using the linear expression, the boundary consistency condition, the positive coefficient constraint condition, and the sparse coefficient constraint condition of the local block, the noise introduced into the human body model can be effectively reduced, and the model accuracy is relatively high.

Therefore, according to the data processing method in this embodiment of the present invention, a first reconstruction model of a human body is divided into M local blocks, and N human body sample alignment models are approximated to the first reconstruction model, to determine a second reconstruction model including M local blocks, of the human body, where the i$^{th}$ local block of the second reconstruction model is determined according to the i$^{th}$ local block of each human body sample alignment model. With the method in this embodiment of the present invention, model accuracy can be effectively improved.

Optionally, in this embodiment of the present invention, block division policies of all the models may be based on a same policy. For example, according to the same block division policy, the first reconstruction model is divided into the M local blocks and the target object sample alignment model is divided into the M local blocks.

Optionally, in this embodiment of the present invention, in S120, the first reconstruction model is divided into the M local blocks according to the block division policy, where M may be alternatively equal to 1, and the process of obtaining the second reconstruction model may be: expressing the first reconstruction model by using a linear combination of each of the N human body sample alignment models in entire human body space, and when an approximation degree of the linear combinations of the N human body sample alignment models to the first reconstruction model meets a present condition, determining the corresponding linear combinations of the N human body sample alignment models as a reconstructed model of the first reconstruction model. The foregoing linear combination expression can also improve the reconstructed model accuracy to some extent.

Optionally, in this embodiment of the present invention, the method further includes:

S150. Perform smooth optimization processing on the second reconstruction model.

Specifically, for example, smooth optimization processing is further performed on the second reconstruction model obtained in S140 by using a surface optimization algorithm provided in the literature "Kangkan Wang, etc. A Two-Stage Framework for 3D Face Reconstruction from RGBD Images. PAMI 2014. Volume: 36, Issue: 8, Pages 1493 - 1504."

A specific step is as follows:

An affine transformation may be determined by three vertexes of each triangular facet and a point in the direction perpendicular to the triangular facet of the second reconstruction model before and after deformation. Coordinates of the fourth point may be calculated by using the following formula according to the three vertexes:

$$V_4 = V_1 + (V_2 - V_1) \times (V_3 - V_1) \Big/ \sqrt{\|(V_2 - V_1) \times (V_3 - V_1)\|} \qquad (8),$$

where $V_1$, $V_2$, $V_3$ are the three vertexes of the triangular facet.

The affine transformation of the triangular facet may be written as:

$$T v_i + d = \tilde{v}_i \qquad i \in 1, ... 4 \qquad (9),$$

where $\tilde{v}_i$, $i \in 1, ... 3$ are deformed points; and after the deformation, the following formula may be obtained:

$$T = \tilde{Q}\, Q^{-1} \qquad (10),$$

where $\begin{aligned} Q &= \begin{bmatrix} v_2 - v_1 & v_3 - v_1 & v_4 - v_1 \end{bmatrix} \\ \tilde{Q} &= \begin{bmatrix} \tilde{v}_2 - \tilde{v}_1 & \tilde{v}_3 - \tilde{v}_1 & \tilde{v}_4 - \tilde{v}_1 \end{bmatrix} \end{aligned}$ .

The foregoing formula indicates that the affine transformation of the triangular facet may be linearly represented by coordinates of deformed vertexes.

An energy function for surface optimization is:

$$\left\{\tilde{v}_k\right\}_{k-1}^n = \underset{v_1, v_2, \ldots, v_n}{Min} \; w_1 \sum_{i=1}^{|T|} \sum_{j \in adj(i)} \left\| T_i - T_j \right\|_F^2 + w_2 \sum_{i=1}^{|T|} \left\| v_i - c_j \right\|^2 \tag{11},$$

where $|T|$ is a quantity of triangular facets of the template model, $adj(i)$ is a set of triangular facets adjacent to an $i^{th}$ triangular facet, and $c_i$ is a vertex of the second reconstruction model corresponding to an $i^{th}$ vertex of the template model. The first term is a smoothness term, representing that a transformation difference between adjacent triangular facets needs to be minimized. The second term is a data term, representing that coordinates of a deformed vertex of the template model need to be aligned with coordinates of a corresponding point in the second reconstruction model. The energy function is a least squares problem and may be solved by using a standard method.

Therefore, according to the data processing method in this embodiment of the present invention, a first reconstruction model of a human body is divided into M local blocks, and N human body sample alignment models are approximated to the first reconstruction model, to determine a second reconstruction model including M local blocks, of the human body, where the $i^{th}$ local block of the second reconstruction model is determined according to the $i^{th}$ local block of each human body sample alignment model. With the method in this embodiment of the present invention, model accuracy can be effectively improved.

It should be understood that the foregoing description is about the second reconstruction model of the human body point cloud of the current frame. After the processing in S110 to S150 is performed on human body point cloud data in an entire time period, and the second reconstruction models resulting from smooth processing in the entire time period are obtained, temporal filtering processing may be further performed on the second reconstruction models in the entire time period.

Optionally, in this embodiment of the present invention, the method 100 further includes:

S160. Perform filtering optimization processing on the second reconstruction models in an entire time period, to obtain an optimized global model for all frames.

Specifically, after human body models of all the frames are reconstructed, that is, after smooth processing is performed on the second reconstruction models of all the frames, filtering processing is performed on the second reconstruction models resulting from smooth processing in the entire time period, to obtain the optimized global model for all the frames. The foregoing process may be also referred to as temporal filtering (Temporal Filtering) processing. Currently, there are many temporal filtering algorithms, and a Hodrick-Prescott filtering algorithm may be used.

It should be understood that performing filtering optimization processing in the entire time period can effectively eliminate jitter that may exist in the entire time period.

It should be understood that in this embodiment of the present invention, the description is based on the assumption that the human body is articulated.

Human body three-dimensional modeling has profound research significance and wide commercial applications. RGB-D cameras are easy to operate and cost less. A dynamic human body reconstruction algorithm may be applied to augmented reality display in a video conference system, to collect and transmit a to-be-displayed dynamic human body three-dimensional model in real time. In the present invention, in the local block-based global modeling algorithm, a three-dimensional posture of the human body is represented by the lower-dimensional sparse coding solution, and the local block-based global modeling algorithm may be applied to code transmission of the three-dimensional human body, that is, the human body model library containing a huge amount of information is preconfigured at a receive end, and a transmit end needs to transmit only the sparse coding solution.

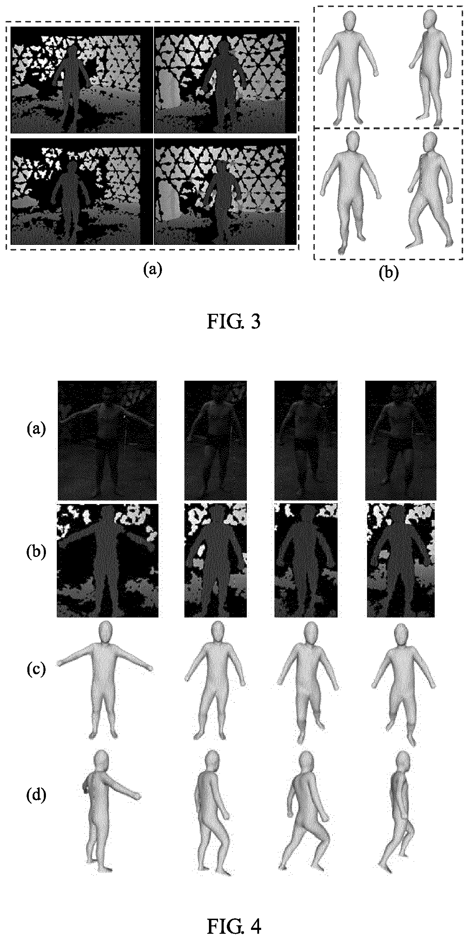

FIG. 3 shows a result of processing, by using the data processing method in this embodiment of the present invention, a human body depth data sequence simultaneously captured by one or more RGB-D cameras.

As shown in FIG. 3(a), two RGB-D cameras disposed in front and behind simultaneously capture the human body depth data sequence. Specifically, FIG. 3(a) shows depth images of two postures, and each row includes depth images in a same posture captured by the two RGB-D cameras in front and behind.

Depth images of two postures shown in FIG. 3(a) are processed by using the data processing method in this embodiment of the present invention, and a processing result is shown in FIG. 3(b). FIG. 3(b) shows reconstruction models in the two postures from two perspectives.

It can be learned from FIG. 3 that using the data processing method in this embodiment of the present invention can reconstruct a real smooth human body model.

FIG. 4 shows a human body modeling result obtained by using the data processing method in this embodiment of the present invention.

A test sequence includes a total of 321 frames, and a dynamic human body model sequence is obtained. FIG. 4 shows modeling results of only the 40th, 140th, 180th, and 280th frames. FIG. 4(a) includes color images. FIG. 4(b) includes depth images. FIG. 4(c) shows modeling results obtained by using the data processing method in this embodiment of the present invention. FIG. 4(d) shows display results, from another perspective, of the modeling results obtained by using the data processing method in this embodiment of the present invention.

It can be learned from FIG. 4 that when human body postures change greatly, using the data processing method in this embodiment of the present invention can also reconstruct a real smooth human body model.

Therefore, according to the data processing method in this embodiment of the present invention, using a local block-based global human body reconstruction method can more accurately reconstruct dynamic three-dimensional models of a human body when strong noise or a hole exists in an input depth image. In addition, in a modeling processing, only one human body database including a small quantity of samples, of a standard posture is needed to reconstruct human body models for various human body shapes and postures. The modeling process is simpler, and the data processing method is to be used more widely in future.

It should be understood that in this embodiment of the present invention, more Kinect RGB-D cameras used to collect human body depth data indicate that the finally obtained second reconstruction model is more accurate. However, in this embodiment of the present invention, a quantity of Kinect RGB-D cameras is not strictly limited. For example, in this embodiment of the present invention, one Kinect RGB-D camera is used to collect depth image data, or a more accurate human body model may be obtained by using the local block-based method. That is, in the data processing method in this embodiment of the present invention, the quantity of Kinect RGB-D cameras is not strictly limited, and therefore, costs of a modeling process are relatively low, and there is relatively wide application.

Therefore, according to the data processing method in this embodiment of the present invention, a first reconstruction model of a human body is divided into M local blocks, and N human body sample alignment models are approximated to the first reconstruction model, to determine a second reconstruction model including M local blocks, of the human body, where the $i^{th}$ local block of the second reconstruction model is determined according to the $i^{th}$ local block of each human body sample alignment model. With the method in this embodiment of the present invention, model accuracy can be effectively improved. In addition, in this embodiment of the present invention, the second reconstruction model approximating to the first reconstruction model to a relatively great extent can be obtained based on a relatively small-scale human body sample database. Therefore, the data processing method in this embodiment of the present invention can also reduce requirements on a quantity of models and posture changes in a human body sample database, and therefore is to be applied more widely in future. The data processing method in this embodiment of the present invention may be further applied to modeling of another dynamic object in the computer graphics and vision fields.

In the above, the local block-based model reconstruction method in this embodiment of the present invention is described by using an example in which the target object is a human body. It should be understood that the target object may be alternatively an animal or another dynamic object. A person in the art may obviously make any equivalent modification or change according to the human body-based modeling example provided in the above, to obtain a modeling solution for the animal or the dynamic object. This modification or change also falls within the scope of this embodiment of the present invention.

Based on the foregoing technical solution, according to the data processing method in this embodiment of the present invention, a first reconstruction model of a target object is divided into M local blocks, and N target object sample alignment models are approximated to the first reconstruction model, to determine a second reconstruction model that is of the target object and includes M local blocks, where the $i^{th}$ local block of the second reconstruction model is determined according to the $i^{th}$ local block of each target object sample alignment model. With the method in this embodiment of the present invention, model accuracy can be effectively improved.

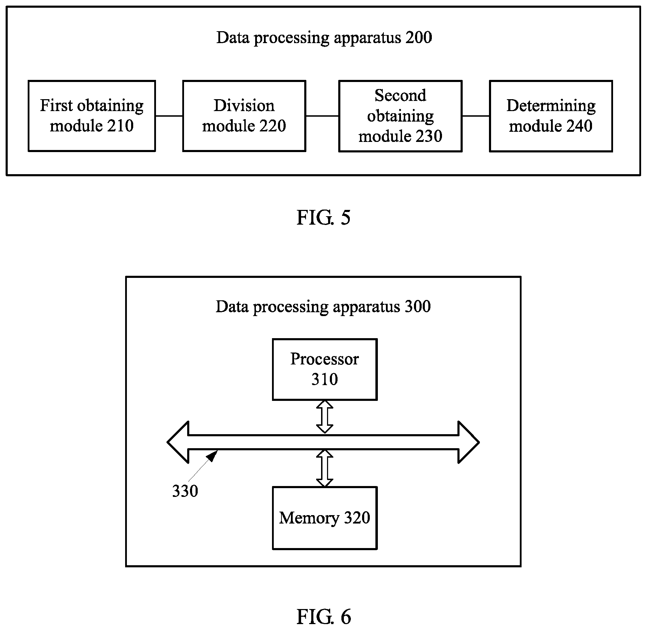

In the above, the data processing method in this embodiment of the present invention is described with reference to FIG. 1 to FIG. 4. A data processing apparatus in an embodiment of the present invention is described in the following with reference to FIG. 5 and FIG. 6.

FIG. 5 shows a schematic block diagram of a data processing apparatus 200 according to an embodiment of the present invention. As shown in FIG. 5, the apparatus 200 includes a first obtaining module 210, a division module 220, a second obtaining module 230, and a determining module 240.

The first obtaining module 210 is configured to obtain a first reconstruction model of a target object.

Specifically, the first reconstruction model may be a model that is reconstructed based on the human body point cloud data and that is used to describe human body point cloud data of a human body. The first reconstruction model is specifically a model determined after a human body sample model in a preset human body database is aligned with the human body point cloud data of the human body. Alignment herein means that the first reconstruction model has a point alignment relationship with the human body point cloud data. Specifically, each vertex included in the first reconstruction model is corresponding to a point in the human body point cloud data of the human body, and two points of each pair of corresponding points are nearest adjacent points.

Because the human body point cloud data is data collected based on the depth image data of the human body captured by a camera, the human body point cloud data generally includes strong noise, and the first reconstruction model obtained based on the human body point cloud data also includes noise, resulting in relatively low model precision.

The first reconstruction model needs to be further processed, so as to improve the model precision.

The division module 220 is configured to divide the first reconstruction model obtained by the obtaining module into M local blocks, where different local blocks of the M local blocks of the first reconstruction model are corresponding to different parts of the target object, the different parts are represented by different part names, and M is a positive integer greater than 1.

Specifically, for example, the first reconstruction model is a human body model shown in FIG. 2(a). The model is divided into 16 local blocks, and the local blocks are corresponding to different parts of the human body, the different parts are represented by different part names, and as shown in FIG. 2(a), the different local blocks are represented by a series of numbers.

The second obtaining module 230 is configured to obtain N target object sample alignment models, where a posture parameter corresponding to a posture of each target object sample alignment model is the same as a posture parameter corresponding to a posture of the first reconstruction model obtained by the first obtaining module, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M, where i being 1, ..., and M means that assigned values of i are sequentially 1, ..., and M.

Specifically, the human body sample alignment model is model resulting from performing some processing on a standard human body sample model in the preset human body database. For example, the human body sample model undergoes a posture change, so that a posture parameter corresponding to the human body sample model resulting from the posture change (that is, the human body sample alignment model) is the same as that corresponding to the first reconstruction model of the human body, that is, the human body sample model resulting from the posture change and the first reconstruction model have a same posture. For example, if a posture of the first reconstruction model of the human body is squatting, the human body sample alignment model also has the squatting posture. This helps to ensure a constraint on boundary consistency in a subsequent model reconstruction process.

That the $i^{th}$ local block of each human body sample alignment model and the $i^{th}$ local block of the first reconstruction model are corresponding to a part represented by a same part name, of the human body means: If the first reconstruction model of the human body is divided into 16 local blocks, as shown in FIG. 2(a), the human body sample alignment model is also divided into 16 local blocks shown in FIG. 2(a), and the $i^{th}$ local block of the human body sample alignment model and the $i^{th}$ local block of the first reconstruction model indicate the same part of the human body, and for example, both the $i^{th}$ local block of the human body sample alignment model and the $i^{th}$ local block of the first reconstruction model are corresponding to a local block 3 shown in FIG. 2(a).

As for that the $i^{th}$ local block of each human body sample alignment model is aligned with the $i^{th}$ local block of the first reconstruction model, the alignment is: No rigid transformation is needed between the $i^{th}$ local block of each human body sample alignment model and the $i^{th}$ local block of the first reconstruction model to implement alignment between each other, that is, the $i^{th}$ local block of each human body sample alignment model and the $i^{th}$ local block of the first reconstruction model are in a same coordinate system.

The determining module 240 is configured to approximate the N target object sample alignment models obtained by the second obtaining module to the first reconstruction model obtained by the first obtaining module, to determine a second reconstruction model that is of the target object and includes M local blocks, where the $i^{th}$ local block of the second reconstruction model is determined according to the $i^{th}$ local block of each target object sample alignment model, and i is 1, ..., or M, where i being 1, ..., and M means that assigned values of i are sequentially 1, ..., and M.

Specifically, for example, the $i^{th}$ local block of the second reconstruction model is determined according to a linear combination of the $i^{th}$ local block of each human body sample alignment model, and the linear combination of the $i^{th}$ local block of each human body sample alignment model is determined in a process of approximating the N human body sample alignment models to the first reconstruction model.

Therefore, according to the data processing apparatus in this embodiment of the present invention, a first reconstruction model of a human body is divided into M local blocks, and N human body sample alignment models are approximated to the first reconstruction model, to determine a second reconstruction model including M local blocks, of the human body, where the $i^{th}$ local block of the second reconstruction model is determined according to the $i^{th}$ local block of each human body sample alignment model. With the method in this embodiment of the present invention, model accuracy can be effectively improved.

Optionally, in this embodiment of the present invention, adjacent local blocks of the M local blocks of the first reconstruction model obtained by the first obtaining module have a common boundary vertex at a junction.

Specifically, if the $i^{th}$ local block (for example, a right palm) and the $j^{th}$ local block (for example, a right forearm) of the M local blocks are adjacent local blocks, a circle of boundary vertexes at the junction (for example, a right wrist) of the right palm and the right forearm are vertexes belonging to both the $i^{th}$ local block (the right palm) and the $j^{th}$ local block (the right forearm). That is, the $i^{th}$ local block (the right palm) and the $j^{th}$ local block (the right forearm) have the common boundary vertexes (that is, vertexes in the right wrist) at the junction.

The division module 220 divides the first reconstruction model into the M local blocks according to a block division policy, and the adjacent local blocks have the common boundary vertex at the junction. This helps to keep consistency in the boundary in a subsequent local block reconstruction step, so as to further improve model accuracy.

Optionally, in this embodiment of the present invention, the determining module is specifically configured to:

obtain the second reconstruction model according to the following formula:

$$K_i = B_i c_i + \mu_i \qquad \left(i = 1, ..., M\right) \tag{4},$$

where $K_i$ is the $i^{th}$ local block of the M local blocks of the second reconstruction model, $B_i$ is a basis including the $i^{th}$ local blocks of the N target object sample alignment models, $\mu_i$ is an average value of vertex coordinates of the $i^{th}$ local blocks of the N target object sample alignment models, and $c_i$ is a coefficient vector of $B_i$, where a formula for obtaining $c_i$ includes:

$$\mathbf{C} \triangleq \underset{\mathbf{C}}{\arg\min} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 \right)$$
$$s.t. \quad c_i > 0 \qquad \left(i = 1, ..., M\right) \tag{5}$$

or,

$$\mathbf{C} \triangleq \underset{\mathbf{C}}{\arg\min} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$
$$s.t. \quad c_i > 0 \qquad \left(i = 1, ..., M\right) \tag{6}$$

where $\mathbf{C} = \left( c_1^T, c_2^T, ..., c_M^T \right)^T$, $V_i$ is the $i^{th}$ local block of the first reconstruction model, $\Gamma$ is a set of adjacent local blocks of the M local blocks of each target object sample alignment model, $(i, j) \in \Gamma$ represents that the $j^{th}$ local block of each target object sample alignment model is a local block adjacent to the $i^{th}$ local block of each target object sample alignment model, $B_j$ is a basis including the $j^{th}$ local blocks of the target object sample alignment models, $B_{ij}$ is used to represent a boundary vertex at a junction of the $i^{th}$ local block and the $j^{th}$ local block of each target object sample alignment model, $B_{ij}$ is a subset of $B_i$, $\mu_{ij}$ is an average value of $B_{ij}$, $B_{ji}$ is used to represent a boundary vertex at a junction of the $j^{th}$ local block and the $i^{th}$ local block of each target object sample alignment model, $B_{ji}$ is a subset of $B_j$, $\mu_{ji}$ is an average value of $B_{ji}$, $\beta$ is a weight, $\lambda$ is a weight, $\| \|_1$ is an L1 norm, and $\| \|_2$ is an L2 norm.

It can be learned from the above that the first term in the formula (5) represents that linear expression of each local block of each human body sample alignment model is similar to a corresponding local block of the first reconstruction model. That is, an approximation degree of the linear combination of the $i^{th}$ local block of each human body sample alignment model to the $i^{th}$ local block of the first reconstruction model meets a preset condition. Specifically, the preset condition may be determined according to an indicator for a model accuracy requirement.

It should be understood that a single human body part has smaller posture change space than the entire human body. Therefore, more accurate linear expression of each local block in the first reconstruction model can be implemented by using a relatively small-scale human body sample database, so that this embodiment of the present invention can reduce requirements on a quantity of human body models and posture changes in a human body sample database, and therefore is to be applied more widely in future.

The second term in the formula (5) is a boundary constraint, representing that expression results of the common boundary vertex of the two adjacent local blocks are similar in the two local blocks.

Specifically, if the $i^{th}$ and the $j^{th}$ local blocks of the M local blocks included in a human body sample skeleton deformation model model 1 are adjacent local blocks, that is, the $i^{th}$ and the $j^{th}$ local blocks have common boundary vertexes G at the junction. That is, the common boundary vertexes G have same coordinates (or a position expression parameter) in both the $i^{th}$ and the $j^{th}$ local blocks. According to the local block alignment step of S134, that is, after the at least one change of rotation, translation, or scaling, each local block of the human body sample skeleton deformation model model 1 is aligned with the corresponding local block of the first reconstruction model, a model resulting from the local block alignment step is referred to as a human body sample alignment model model 2. In the human body sample alignment model model 2, the $i^{th}$ and the $j^{th}$ local blocks of the M local blocks included in the model 2 may be disconnected from each other, for example, break apart from each other, because of the at least one change of rotation, translation, or scaling. Therefore, the previous common boundary vertexes G are boundary vertexes G1 in the $i^{th}$ local block and boundary vertexes G2 in the $j^{th}$ local block, and coordinates (or a position expression parameter) of the boundary vertexes G1 in the $i^{th}$ local block are different from coordinates (or a position expression parameter) of the boundary vertexes G1 in the $j^{th}$ local block, and similarly, coordinates (or a position expression parameter) of the boundary vertexes G2 in the $i^{th}$ local block are different from coordinates (or a position expression parameter) of the boundary vertexes G2 in the $j^{th}$ local block. This is unhelpful for the boundary consistency in the local block reconstruction process.

The second term in the formula (5) is to resolve the foregoing problem. The second term in the formula (5) is the boundary constraint, representing that the expression results of the common boundary vertex of the two adjacent local blocks are similar in the two adjacent local blocks. That is, the expression results of the common boundary vertex of the two adjacent local blocks in the two adjacent local blocks should meet a preset condition, and the preset condition may be specifically determined according to a specific model accuracy requirement.

The constraint represented by the second term in the formula (5) effectively resolves the boundary inconsistency problem in the local block alignment process.

It can be further learned from the formula (5) that the coefficient vector $c_i$ of $B_i$ is greater than 0 (that is, each element of the coefficient vector $c_i$ is positive), that is, meeting a coefficient positive constraint condition, so as to improve robustness to strong noise.

In this embodiment of the present invention, with reference to the formula (4) and the formula (5), the first reconstruction model and the second reconstruction model are determined according to the linear expression of the M local blocks. This can effectively improve the model accuracy and can also reduce requirements on a quantity of models and model postures in a human body sample database. Therefore, the data processing apparatus is to be applied more widely in future.

In addition to determining the coefficient vector $c_i$ of $B_i$ according to the formula (5), the coefficient vector $c_i$ of $B_i$ may be determined according to the formula (6).

Similar to the formula (5), the first term in the formula (6) represents that linear expression of each local block of each human body sample alignment model is similar to a corresponding local block of the first reconstruction model. The second term is a boundary constraint, representing that expression results of the common boundary vertex of the two adjacent local blocks are similar in the two local blocks. The coefficient vector $c_i$ of $B_i$ is greater than 0, that is, meeting a coefficient positive constraint condition. Different from the formula (5), the formula (6) further includes the third term. The third term represents a sparse coefficient constraint condition in linear expression (that is, there are as many elements of the coefficient vector $c_i$ as possible that are equal to 0). It should be understood that a positive coefficient constraint and the sparse coefficient constraint can improve robustness to strong noise.

This part is about a local block-based global reconstruction algorithm based on a basic idea of sparse coding. A sparse coding problem may be expressed by using the following formula:

$$\underset{c_i}{Min}\left\|Ac-b\right\|_2^2 + \lambda\left\|c_i\right\|_1, s.t. \quad c > 0$$

$$\mathbf{C} = \left(c_1^T, c_2^T, ..., c_M^T\right)^T \tag{7}$$

The formula (5) may be solved by using an L1-minimization method.

Generally, extracted human body point cloud data includes noise, and therefore, the corresponding first reconstruction model also includes noise. According to the local block-based human body modeling method in this embodiment of the present invention, by using the linear expression, the boundary consistency condition, the positive coefficient constraint condition, and the sparse coefficient constraint condition of the local block, the noise introduced into the human body model can be effectively reduced, and the model accuracy is relatively high.

Optionally, in this embodiment of the present invention, the first obtaining module 210 includes a first obtaining unit 211, a second obtaining unit 212, a determining unit 213, an estimation unit 214, and a first deformation unit 215.

The first obtaining unit 211 is configured to obtain target object point cloud data of the target object.

Specifically, two steps of collecting a depth image of the human body and extracting human body point cloud data are included:

1. Collect the depth image of the human body; 2. Extract the human body point cloud data. The specific steps are the same as foregoing related description in the method, and for brevity, details are not repeated herein.

The second obtaining unit 212 is configured to obtain a template model of the target object, where the template model is a model describing standard target object point cloud data of the target object in a preset standard posture.

Specifically, the preset standard standing posture of the human body is a standard standing posture specified in the human body database. First, standard human body point cloud data of the human body in the preset standard standing posture of the human body is obtained. Then, any human body sample model in the human body database is aligned with the standard human body point cloud data of the human body. A model resulting from performing the alignment is the template model of the human body. Each vertex of the template model is corresponding to a point in the standard human body point cloud data, and two points of each pair of corresponding points are nearest adjacent points.

That is, the template model is a deformed model obtained by aligning the human body sample model in the human body database with the standard human body point cloud data of the human body. The obtaining the template model mainly includes the following two steps.

Step one. Establish a correspondence between sparse points.

A sample model A in the human body database is determined as a basis of deformation into the template model.

The sample model A and the standard human body point cloud data of the human body in the standard standing posture are downsampled. For example, the sample model A is initially aligned with the standard human body point cloud data by using an alignment method provided in the literature "Point Set Registration: Coherent Point Drift. Andriy Myronenko, etc. PAMI 2010." Specifically, for example, the standard human body point cloud data or the sample model A undergoes at least one change of translation, rotation, or scaling, so that finally, there are as many data points as possible in the standard human body point cloud data aligning with a vertex of the sample model A, and the data points and the vertex overlap as much as possible.

Corresponding points between the initially aligned sample model A and the standard human body point cloud data are determined according to the initially aligned sample model A and the standard human body point cloud data. For example, for the vertex a1 of the sample model A resulting from the alignment with the standard human body point cloud data, a nearest point is found in an entire human body point cloud based on three-dimensional distances and is used as a corresponding point p1 of the vertex a1 of the standard human body point cloud data.

Based on these correspondences between sparse points, for example, (a1, p1), the sample model A is initially aligned with the standard human body point cloud data. Specifically, the sample model A undergoes at least one change of translation, rotation, or scaling, so that the sample model A is initially aligned with the standard human body point cloud data. For the ease of understanding and description, the sample model A deformed by means of the foregoing initial alignment is referred to as a sample model A'.

Step two. Establish a correspondence between dense points.

Dense corresponding points are determined between the sample model A' and the standard human body point cloud data according to the sample model A' and the standard human body point cloud data by using a method for finding a corresponding nearest adjacent point. Based on the dense corresponding points, the sample model A' is further aligned with the standard human body point cloud data. Specifically, the sample model A' undergoes at least one change of translation, rotation, or scaling, so that the sample model A' is further aligned with the standard human body point cloud data.

A deformed model resulting from performing the foregoing second alignment on the sample model A' is determined as the template model of the human body. That is, the template model more accurately describes the standard human body point cloud data of the human body in the standard standing posture.

It should be understood that when the corresponding points are determined by using the nearest neighbor method, if normal vectors of two points form an angle less than 90 degrees and are less than 0.1 m apart, the corresponding point found by using the nearest neighbor method is proper. Using a determining condition for the angle between the normal vectors is to avoid incorrect match between a point on a front surface and a point on a back surface.

It should be understood that by using the foregoing two steps of establishing correspondences between points, the template model that has a point correspondence with the standard human body point cloud data in the standard standing posture is obtained.

The determining unit 213 is configured to determine a point correspondence between the target object point cloud data obtained by the first obtaining unit and the template model obtained by the second obtaining unit.

Specifically, the point correspondence between the human body point cloud data and the template model may be determined by using an alignment method provided in the literature "Point Set Registration: Coherent Point Drift. Andriy Myronenko, etc. PAMI 2010." For example, a corresponding point of a vertex a2 of the template model in the human body point cloud data is p2, and the pair of corresponding points (a2, p2) are nearest adjacent points.

For example, the point correspondence between the template model and the human body point cloud data of the current frame may alternatively be established by referring to the first reconstruction model of the previous frame.

It should be understood that, alternatively, another alignment method may be used to determine the point correspondence between the human body point cloud data and the template model. This is not limited in this embodiment of the present invention.

The estimation unit 214 is configured to estimate, based on a skeleton-driven deformation technology and the point correspondence determined by the determining unit, a posture change parameter of the target object point cloud data that is relative to the template model determined by the second obtaining unit and that is determined by the first obtaining unit.

The first deformation unit 215 deforms, by using the posture change parameter that is of the target object point cloud data relative to the template model and that is estimated by the estimation unit, the template model into the first reconstruction model with a same posture as the target object point cloud data.

Specifically, the skeleton-driven technology uses a skeletal motion model (Skeletal Motion Model) to represent a movement of the human body, and implements smooth human body deformation based on almost rigid movement characteristics of each small part of the human body and by using skinning weight (Skinning Weight) and linear blend skinning (Linear Blend Skinning) technologies. The skeletal motion model includes a mesh human body model and a human body skeleton embedded in the model. The human body skeleton includes some joints (Joint) and bones (Bone). A connection between joints is orderly and may be represented by using a tree structure. A rotation axis is defined for each joint, and a bone connecting to the joint may arbitrarily rotate around the rotation axis of the joint. A movement of the bone is affected by movements of all joints in an entire chain (Kinematic Chain) from a root joint to the joint connected to the bone. A movement of each vertex of the template model may be expressed by using a linear combination of rigid movements of all the bones of the human body skeleton. A correlation between the movement of each vertex of the template model and the movement of each bone of the human body skeleton is represented by using a skinning weight (Skinning Weight). For a specific method, refer to an existing method in "Baran, etc, Automatic rigging and animation of 3d characters. SIGGRAPH 2007, page 72."

Specifically, FIG. 2(b) shows a schematic diagram of a skeleton movement model. The skeleton movement model includes 22 joints, and a joint angle $\theta_n$, that is, an angle by which the bone rotates around the joint rotation axis, is defined for each joint. Overall rigid transformation of the skeleton movement model is represented by a parameter $\theta_0\hat{\xi}$. A skeleton posture of the skeleton movement model may be represented by a vector $\chi=(\theta_0\hat{\xi}, \theta_1,..., \theta_n)$, and degrees of freedom of the skeleton posture are 22 + 6 = 28.

Optionally, in this embodiment of the present invention, the posture change parameter of the target object point cloud data that is relative to the template model determined by the second obtaining unit and that is determined by the first obtaining unit and the first reconstruction model with the same posture as the target object point cloud data are determined according to the following formulas:

$$q_i(\chi) = \sum_{g=1}^{R} \left( w_i^g \prod_{j=0}^{j_g} \exp\left(\theta_{\varphi_g(j)}\hat{\xi}_{\varphi_g(j)}\right) \right) q_i^{'} \tag{1},$$

and

$$E(\chi) = Min \sum_{(q_i,p_i)\in C} \left\| q_i(\chi) - p_i \right\|^2 \tag{2},$$

where $q_i(\chi)$ is the i<sup>th</sup> vertex of the first reconstruction model, $q_i^{'}$ is the i<sup>th</sup> vertex of the template model, $R$ is a total quantity of bones included in the skeleton model using the skeleton-driven technology, $w_i^g$ is a movement weight of a bone $g$ for the i<sup>th</sup> vertex of the template model, $j_g$ is a quantity of joints in the skeleton model that affect a movement of the bone $g$, $\varphi_g(j)$ is an index of the j<sup>th</sup> joint in the skeleton model that affects the bone $g$, $\exp(\theta_{\varphi_g(j)}\hat{\xi}_{\varphi(j)})$ is a rigid transformation matrix of the j<sup>th</sup> joint, $C$ is a set of corresponding points between the first reconstruction model and the human body point cloud data, and $(v_i,p_i)$ is a pair of corresponding points in the set $C$ of the corresponding points between the first reconstruction model and the human body point cloud data.

It should be understood that in this embodiment of the present invention, the posture change parameter of the human body point cloud data relative to the template model is corresponding to the skeleton posture vector $\chi=(\theta_0\hat{\xi}, \theta_1,..., \theta_n)$ in the formulas (1) and (2).

Specifically, multiple optimization iterations, for example, eight optimization iterations, are performed based on the formulas (1) and (2), so that the first reconstruction model resulting from deforming the template model has a better alignment relationship with the human body point cloud data of the current frame. Optionally, a Levenberg-Marquardt algorithm may be used to perform optimization iterations.

More specifically, in the multiple optimization iterations, a skeleton posture $\chi^{t-1}$ of the previous frame and corresponding points between the first reconstruction model of the previous frame and the human body point cloud data of the current frame may be used as an initial iterative condition, so as to finally obtain a skeleton posture $\chi^t$ of the current frame.

To sum up, the posture change parameter of the human body point cloud data relative to the template model, that is, the skeleton posture vector $\chi$ in the formulas (1) and (2), may be estimated by means of the multiple iterations based on the formulas (1) and (2). Then, the skeleton posture vector $\chi$ is substituted into the formula (1), coordinates (corresponding to $q_i(\chi)$ in the formula (1)) of each vertex of the first reconstruction model may be obtained through calculation, and the first reconstruction model is obtained.

It should be understood that a posture parameter of the first reconstruction model may be determined by using the posture change parameter (corresponding to the skeleton posture vector $\chi=(\theta_0\hat{\xi}, \theta_1,..., \theta_n)$ in the formulas (1) and (2)) that is of the human body point cloud data relative to the template model and that is estimated in S114. Specifically, the posture change parameter (corresponding to the skeleton posture vector $\chi=(\theta_0\hat{\xi}, \theta_1,...,\theta_n)$ in the formulas (1) and (2)) is determined as the posture parameter of the first reconstruction model. That is, the posture parameter of the first reconstruction model describes a posture change of the first reconstruction model relative to the template model.

To better reflect deformation of human body details, for example, local deformation and detail deformation of a limb, detail deformation may be further implemented based on the skeleton-driven deformation, so that the resulting first reconstruction model is truer to the actual human body.

Optionally, in this embodiment of the present invention, the first obtaining module 210 includes:

a first obtaining unit 211, configured to obtain target object point cloud data of the target object;

a second obtaining unit 212, configured to obtain a template model of the target object, where the template model is a model describing standard target object point cloud data of the target object in a preset standard posture;

a determining unit 213, configured to determine a point correspondence between the target object point cloud data obtained by the first obtaining unit and the template model obtained by the second obtaining unit;

an estimation unit 214, configured to estimate, based on a skeleton-driven deformation technology and the point correspondence determined by the determining unit, a posture change parameter of the target object point cloud data that is relative to the template model determined by the second obtaining unit and that is determined by the first obtaining unit;

where for specific description about the first obtaining unit 211, the second obtaining unit 212, the determining unit 213, and the estimation unit 214, refer to the above, and for brevity, details are not repeated herein;

a second deformation unit 215A, configured to deform, by using the posture change parameter that is of the target object point cloud data relative to the template model and that is estimated by the estimation unit, the template model into a skeleton deformation model with a same posture as the target object point cloud data, so that the skeleton deformation model is aligned with the target object point cloud data; and

a third deformation unit 215B, configured to deform, based on a mesh deformation technology, the skeleton deformation model obtained by the second deformation unit, to obtain the first reconstruction model, so that the first reconstruction model matches a shape of the target object point cloud data.

Specifically, an affine transformation $X_i$ is assigned to each vertex of the skeleton deformation model, the affine transformation $X_i$ is used to transform each vertex of the skeleton deformation model to a corresponding point of the vertex of the human body point cloud. Transformations of all the vertexes are integrated, to obtain a $4n*3$ matrix. An energy function for the deformation is as follows:

$$E\left( X \right) = \left\| W\left( DX - U \right) \right\|_F^2 + \alpha \sum_{i,j\in\varepsilon} \left\| X_i - X_j \right\|_F^2 \qquad (3),$$

where $X$ is a matrix including the transformation of each vertex, $D$ is a matrix including coordinates of each vertex before the deformation, $U$ is a coordinate matrix of a corresponding point in the human body point cloud, $W$ is a weight matrix including a weight value of each corresponding point, $\varepsilon$ is a set of all sides of the skeleton deformation model, $i, j$ are indexes of two vertexes of a side (a connection between any two adjacent vertexes of the skeleton deformation model is referred to as a side) of the skeleton deformation model, and $\alpha$ is a smoothness term weight.

The first term in the formula (3) is a data term, representing that a distance between the vertex of the skeleton deformation model resulting from the deformation and the corresponding point in the human body point cloud data is as short as possible. The second term in the formula (3) is a smoothness term, representing that transformations of two vertexes of a side need to be similar, to make overall deformation smooth.

In the foregoing detail deformation process, the smoothness term weight is initially set to a large value, and as a quantity of iteration times gradually decreases, this manner helps to reduce impact of strong noise in input data on deformation as much as possible.

Specifically, the energy function in the formula (3) is solved by using a least squares method.

In this embodiment of the present invention, the first reconstruction model of the current frame results from sequentially performing skeleton-driven deformation and detail deformation on the template model of the human body, so as to better reflect deformation of human body details, for example, local deformation and detail deformation of a limb, and to make the resulting first reconstruction model truer to the actual human body.

In this embodiment of the present invention, alternatively, existing point alignment and deformation methods may be used, for example, the first reconstruction model of the human body point cloud data is obtained by using existing skeleton alignment, coarse alignment, and fine alignment. Alternatively, the first reconstruction model of the previous frame is aligned with the human body point cloud data of the current frame based on the skeleton-driven deformation method, and then, detail deformation is implemented by using Laplacian deformation, to obtain the first reconstruction model of the current frame.

Optionally, in this embodiment of the present invention, the second obtaining module 230 includes a third obtaining unit 231, a fourth deformation unit 232, a division unit 233, and a fourth obtaining unit 234.

The third obtaining unit 231 is configured to obtain N target object sample models from a preset target object database.

Specifically, the human body standard database in this embodiment of the present invention may include 190 human body models in the standard standing posture. That is, the second obtaining module obtains 190 (that is, N is equal to 190) human body models in the standard standing posture from the human body standard database.

The fourth deformation unit 232 is configured to deform, based on the skeleton-driven deformation technology and according to the posture parameter of the first reconstruction model, the N target object sample models obtained by the third obtaining unit into N target object sample skeleton deformation models corresponding to the same posture parameter as the first reconstruction model.

Specifically, the N human body sample models are deformed into the N human body sample skeleton deformation models by using a posture change parameter (corresponding to the skeleton posture $\chi$ determined based on the formulas (1) and (2)) that is of the current frame and that is determined in the skeleton-driven deformation process. The human body sample skeleton deformation model has a same posture as the first reconstruction model (or the human body point cloud data).

The division unit 233 is configured to divide each target object sample skeleton deformation model obtained by the fourth deformation unit into M local blocks, where the $i^{th}$ local block of each target object sample skeleton deformation model and the $i^{th}$ local block of the first reconstruction model are corresponding to a part that is of the target object and is represented by a same part name.

Specifically, the N human body sample skeleton deformation models resulting from the posture change each are divided into the M local blocks, and adjacent local blocks of the M local blocks have a common boundary vertex at a junction.

The fourth obtaining unit 234 is configured to perform at least one change of rotation, translation, or scaling on the $i^{th}$ local block that is of each target object sample skeleton deformation model and that is obtained by the division unit, to obtain the N target object sample alignment models, where after the at least one change of rotation, translation, or scaling, the $i^{th}$ local block of each target object sample alignment model is aligned with the $i^{th}$ local block of the first reconstruction model, and i is 1, 2, ..., or M.

Specifically, by using an existing Procrustes analysis method (for example, "D. G. Kendall, 'A survey of the statistical theory of shape,' Statistical Science, vol. 4, no. 2, pp. 87-99, 1989."), a parameter about rigid transformation from the $i^{th}$ local block of the M local blocks of each human body sample skeleton deformation model of the N human body sample skeleton deformation models to the $i^{th}$ local block of the first reconstruction model is estimated; according to the rigid transformation parameter, the $i^{th}$ local block of each human body sample skeleton deformation model is aligned with the $i^{th}$ local block of the first reconstruction model by performing the at least one change of rotation, translation, or scaling on the $i^{th}$ local block of each human body sample skeleton deformation model of the N human body sample skeleton deformation models, to obtain the N human body sample alignment models. The step S134 may be also referred to as a local block alignment step.

It should be understood that the N human body sample alignment models obtained according to the local block alignment step of S134 eliminates rigid transformation between the human body sample alignment models and the first reconstruction model to a relatively great extent. Therefore, in S140, the human body sample alignment models can well express the first reconstruction model.

Optionally, in this embodiment of the present invention, the apparatus further includes:

an optimization module 250, configured to perform smooth optimization processing on the second reconstruction model.

Specifically, for example, the optimization module 250 is configured to perform smooth optimization processing on the second reconstruction model obtained in S140 by using a surface optimization algorithm provided in the literature "Kangkan Wang, etc. A Two-Stage Framework for 3D Face Reconstruction from RGBD Images. PAMI 2014. Volume: 36, Issue: 8, Pages 1493 - 1504."

It should be understood that the foregoing description is about the second reconstruction model of the human body point cloud of the current frame. After the processing by the first obtaining module 210, the division module 220, the second obtaining module 230, the determining module 240, and the optimization module 250 is performed on human body point cloud data in an entire time period, and second reconstruction models resulting from smooth processing in the entire time period are obtained, temporal filtering processing may be further performed on the second reconstruction models in the entire time period.

Optionally, in this embodiment of the present invention, the apparatus 200 further includes:

a global optimization module 260, configured to perform filtering optimization processing on the second reconstruction models in the entire time period, to obtain an optimized global model for all frames.

Specifically, after the optimization module 250 performs smooth processing on the second reconstruction models of all the frames, the global optimization module 260 is configured to perform filtering processing on the second reconstruction models resulting from smooth processing in the entire time period, to obtain the optimized global model for all the frames. The foregoing process may be also referred to as temporal filtering (Temporal Filtering) processing. Currently, there are many temporal filtering algorithms, and the global optimization module 260 may use a Hodrick-Prescott filtering algorithm.

It should be understood that performing filtering optimization processing in the entire time period can effectively eliminate jitter that may exist in the entire time period.

Therefore, according to the data processing apparatus in this embodiment of the present invention, a first reconstruction model of a human body is divided into M local blocks, and N human body sample alignment models are approximated to the first reconstruction model, to determine a second reconstruction model including M local blocks, of the human body, where the ith local block of the second reconstruction model is determined according to the ith local block of each human body sample alignment model. With the apparatus in this embodiment of the present invention, model accuracy can be effectively improved.

It should be understood that the foregoing and another operation and/or function of each module of the data processing apparatus 200 in this embodiment of the present invention is to implement a corresponding process of each method in FIG. 1 to FIG. 4. For brevity, details are not repeated herein.

In the above, with reference to FIG. 5, the data processing apparatus in this embodiment of the present invention is described by using an example in which the target object is a human body. It should be understood that the target object may be alternatively an animal or another dynamic object. A person in the art may obviously make any equivalent modification or change according to the human body-based modeling example provided in the above, to obtain a modeling solution for the animal or the dynamic object. This modification or change also falls within the scope of this embodiment of the present invention.

Based on the foregoing technical solution, according to the data processing apparatus in this embodiment of the present invention, a first reconstruction model of a target object is divided into M local blocks, and N target object sample alignment models are approximated to the first reconstruction model, to determine a second reconstruction model that is of the target object and includes M local blocks, where the ith local block of the second reconstruction model is determined according to the ith local block of each target object sample alignment model. With the apparatus in this embodiment of the present invention, model accuracy can be effectively improved.

As shown in FIG. 6, an embodiment of the present invention further provides a data processing apparatus 300. The apparatus 300 includes a processor 310, a memory 320, and a bus system 330. The processor 310 and the memory 320 are connected by using the bus system 330. The memory 320 is configured to store an instruction. The processor 310 is configured to execute the instruction stored in the memory 320 to:

obtain a first reconstruction model of a target object;
divide the first reconstruction model into M local blocks, where different local blocks of the M local blocks of the first reconstruction model are corresponding to different parts of the target object, the different parts are represented by different part names, and M is a positive integer greater than 1;
obtain N target object sample alignment models, where a posture parameter corresponding to a posture of each target object sample alignment model is the same as a posture parameter corresponding to a posture of the first reconstruction model, and each target object sample alignment model includes M local blocks, where the i$^{th}$ local block of each target object sample alignment model and the i$^{th}$ local block of the first reconstruction model are corresponding to a part that is of the target object and is represented by a same part name, the i$^{th}$ local block of each target object sample alignment model is aligned with the i$^{th}$ local block of the first reconstruction model, N is a positive integer, and i is 1, ..., or M, where i being 1, ..., and M means that assigned values of i are sequentially 1, ..., and M; and

approximate the N target object sample alignment models to the first reconstruction model, to determine a second reconstruction model that is of the target object and includes M local blocks, where the i$^{th}$ local block of the second reconstruction model is determined according to the i$^{th}$ local block of each target object sample alignment model, and i is 1, ..., or M, where i being 1, ..., and M means that assigned values of i are sequentially 1, ..., and M.

Therefore, according to the data processing apparatus in this embodiment of the present invention, a first reconstruction model of a human body is divided into M local blocks, and N human body sample alignment models are approximated to the first reconstruction model, to determine a second reconstruction model including M local blocks, of the human body, where the i$^{th}$ local block of the second reconstruction model is determined according to the i$^{th}$ local block of each human body sample alignment model. With the apparatus in this embodiment of the present invention, model accuracy can be effectively improved.

Optionally, in an embodiment, adjacent local blocks of the M local blocks of the first reconstruction model have a common boundary vertex at a junction.

Optionally, in an embodiment, the processor 310 is specifically configured to obtain the second reconstruction model according to the following formula:

$$K_i = B_i c_i + \mu_i \qquad \left( i = 1, ..., M \right),$$

where $K_i$ is the i$^{th}$ local block of the M local blocks of the second reconstruction model, $B_i$ is a basis including the i$^{th}$ local blocks of the N target object sample alignment models, $\mu_i$ is an average value of vertex coordinates of the i$^{th}$ local blocks of the N target object sample alignment models, and $c_i$ is a coefficient vector of $B_i$, where a formula for obtaining $c_i$ includes:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 \right)$$
$$s.t. \quad c_i > 0 \quad \left( i = 1, ..., M \right) \qquad,$$

or

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$
$$s.t. \quad c_i > 0 \quad \left( i = 1, ..., M \right) \qquad,$$

where $\mathbf{C} = \left( c_1^T, c_2^T, ..., c_M^T \right)^T$, $V_i$ is the i$^{th}$ local block of the first reconstruction model, $\Gamma$ is a set of adjacent local blocks of the M local blocks of each target object sample alignment model, $(i, j) \in \Gamma$ represents that the j$^{th}$ local block of each target object sample alignment model is a local block adjacent to the i$^{th}$ local block of each target object sample alignment model, $B_j$ is a basis including the j$^{th}$ local blocks of the target object sample alignment models, $B_{ij}$ is used to represent a boundary vertex at a junction of the i$^{th}$ local block and the j$^{th}$ local block of each target object sample alignment model, $B_{ij}$ is a subset of $B_i$, $\mu_{ij}$ is an average value of $B_{ij}$, $B_{ji}$ is used to represent a boundary vertex at a junction of the j$^{th}$ local block and the i$^{th}$ local block of each target object sample alignment model, $B_{ji}$ is a subset of $B_j$, $\mu_{ji}$ is an average value of $B_{ji}$, $\beta$ is a weight, $\lambda$ is a weight, $\| \|_1$ is an L1 norm, and $\| \|_2$ is an L2 norm.

Optionally, in an embodiment, the processor 310 is specifically configured to:

obtain target object point cloud data of the target object;

obtain a template model of the target object, where the template model is a model describing standard target object point cloud data of the target object in a preset standard posture;

determine a point correspondence between the target object point cloud data and the template model;

estimate, based on a skeleton-driven deformation technology and the point correspondence, a posture change parameter of the target object point cloud data relative to the template model; and

deform, by using the posture change parameter of the target object point cloud data relative to the template model, the template model into the first reconstruction model with a same posture as the target object point cloud data.

Optionally, in an embodiment, the processor 310 is specifically configured to:

obtain target object point cloud data of the target object;

obtain a template model of the target object, where the template model is a model describing standard target object point cloud data of the target object in a preset standard posture;

determine a point correspondence between the target object point cloud data and the template model;

estimate, based on a skeleton-driven deformation technology and the point correspondence, a posture change parameter of the target object point cloud data relative to the template model;

deform, by using the posture change parameter of the target object point cloud data relative to the template model, the template model into a skeleton deformation model with a same posture as the target object point cloud data, so that the skeleton deformation model is aligned with the target object point cloud data; and

deform, based on a mesh deformation technology, the skeleton deformation model, to obtain the first reconstruction model, so that the first reconstruction model matches a shape of the target object point cloud data.

Optionally, in an embodiment, the processor 310 is specifically configured to:

obtain N target object sample models from a preset target object database;

deform, based on the skeleton-driven deformation technology and according to the posture parameter of the first reconstruction model, the N target object sample models into N target object sample skeleton deformation models corresponding to the same posture parameter as the first reconstruction model;

divide each target object sample skeleton deformation model into M local blocks, where the $i^{th}$ local block of each target object sample skeleton deformation model and the $i^{th}$ local block of the first reconstruction model are corresponding to a part that is of the target object and is represented by a same part name; and

perform at least one change of rotation, translation, or scaling on the $i^{th}$ local block of each target object sample skeleton deformation model, to obtain the N target object sample alignment models, where after the at least one change of rotation, translation, or scaling, the $i^{th}$ local block of each target object sample alignment model is aligned with the $i^{th}$ local block of the first reconstruction model, and i is 1, 2, ..., or M.

Optionally, in an embodiment, the processor 310 is further configured to perform smooth optimization processing on the second reconstruction model.

It should be understood that the foregoing description is about the second reconstruction model of a human body point cloud of a current frame. After obtaining the second reconstruction models in an entire time period, optionally, in an embodiment, the processor 310 is further configured to perform filtering optimization processing on the second reconstruction models in the entire time period, to obtain a global optimization model for all frames.

It should be understood that in this embodiment of the present invention, the processor 310 may be a central processing unit (Central Processing Unit, "CPU" for short), or the processor 310 may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor. Alternatively, the processor may be any conventional processor or the like.

The memory 320 may include a read-only memory and a random access memory, and provides an instruction and data for the processor 310. A part of the memory 320 may further include a nonvolatile random access memory. For example, the memory 320 may further store information about a device type.

The bus system 330 may further include a power bus, a control bus, a status signal bus, or the like, in addition to a data bus. However, for clear description, various types of buses in the figure are marked as the bus system 330.

During an implementation process, each step in the foregoing methods may be completed by using a hardware integrated logic circuit in the processor 310 or an instruction in form of software. The steps of the methods disclosed with reference to the embodiments of the present invention may be directly executed and completed by a hardware processor, or may be executed and completed by using a combination of hardware in the processor and software modules. A software module may be located in a random access memory, a flash memory, a read-only memory, a programmable read-only memory or an electrically erasable programmable memory, a register, or another mature storage medium in the art. The storage medium is located in the memory 320. The processor 310 reads the information in the memory 320 and completes the steps of the foregoing methods in combination with hardware of the processor 310. Details are not described herein again for avoiding repetition.

Therefore, according to the data processing apparatus in this embodiment of the present invention, a first reconstruction model of a human body is divided into M local blocks, and N human body sample alignment models are approximated to the first reconstruction model, to determine a second reconstruction model including M local blocks, of the human body, where the $i^{th}$ local block of the second reconstruction model is determined according to the $i^{th}$ local block of each human body sample alignment model. With the apparatus in this embodiment of the present invention, model accuracy can be effectively improved.

It should be understood that the apparatus 300 in this embodiment of the present invention may be corresponding to the data processing apparatus 200 in the embodiment of the present invention, and the foregoing and another operation and/or function of each module of the apparatus 300 is to implement a corresponding process of each method in FIG. 1 to FIG. 4. For brevity, details are not repeated herein.

Based on the foregoing technical solution, according to the data processing apparatus in this embodiment of the present invention, a first reconstruction model of a target object is divided into M local blocks, and N target object sample alignment models are approximated to the first reconstruction model, to determine a second reconstruction model that is of the target object and includes M local blocks, where the $i^{th}$ local block of the second reconstruction model is determined according to the $i^{th}$ local block of each target object sample alignment model. With the method in this embodiment of the present invention, model accuracy can be effectively improved.

It should be understood that the $i^{th}$, the first, the second, the third, the fourth, and various numbers in this application are used for differentiation only for ease of description, instead of limiting the scope of the embodiments of the present invention. For example, the $i^{th}$ local block is only a name of a local block, but not to limit the scope of the embodiments of the present invention.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.   A data processing method, comprising:

obtaining a first reconstruction model of a target object;
dividing the first reconstruction model into M local blocks, wherein different local blocks of the M local blocks of the first reconstruction model are corresponding to different parts of the target object, the different parts are represented by different part names, and M is a positive integer greater than 1;
obtaining N target object sample alignment models, wherein a posture parameter corresponding to a posture of each target object sample alignment model is the same as a posture parameter corresponding to a posture of the first reconstruction model, and each target object sample alignment model comprises M local blocks, wherein the i$^{th}$ local block of each target object sample alignment model and the i$^{th}$ local block of the first reconstruction model are corresponding to a part that is of the target object and is represented by a same part name, the i$^{th}$ local block of each target object sample alignment model is aligned with the i$^{th}$ local block of the first reconstruction model, N is a positive integer, and i is 1, ..., or M; and
approximating the N target object sample alignment models to the first reconstruction model, to determine a second reconstruction model that is of the target object and comprises M local blocks, wherein the i$^{th}$ local block of the second reconstruction model is determined according to the i$^{th}$ local block of each target object sample alignment model.

2.   The method according to claim 1, wherein the approximating the N target object sample alignment models to the first reconstruction model, to determine a second reconstruction model that is of the target object and comprises M local blocks comprises:

obtaining the second reconstruction model according to the following formula:

$$K_i = B_i c_i + \mu_i \quad (i = 1, ..., M),$$

wherein $K_i$ is the i$^{th}$ local block of the M local blocks of the second reconstruction model, $B_i$ is a basis comprising the i$^{th}$ local blocks of the N target object sample alignment models, $\mu_i$ is an average value of vertex coordinates of the i$^{th}$ local blocks of the N target object sample alignment models, and $c_i$ is a coefficient vector of $B_i$, wherein a formula for obtaining $c_i$ comprises:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 \right)$$
$$s.t. \quad c_i > 0 \quad (i = 1, ..., M)$$

,

or

$$\mathbf{C} \triangleq \underset{\mathbf{C}}{\arg\min}\left(\sum_{i=1}^{M}\left\|B_i c_i + \mu_i - V_i\right\|_2^2 + \beta \sum_{(i,j)\in\Gamma}\left\|B_{ij} c_i + \mu_{ij} - B_{ji} c_j - \mu_{ji}\right\|_2^2 + \lambda\sum_{i=1}^{M}\left\|c_i\right\|_1\right)$$

$$s.t. \quad c_i > 0 \quad (i = 1,...,M)$$

,

wherein $C = [c_1, c_2,...,c_M]^T$, $V_i$ is the $i$th local block of the first reconstruction model, $\Gamma$ is a set of adjacent local blocks of the M local blocks of each target object sample alignment model, $(i, j) \in \Gamma$ represents that the $j$th local block of each target object sample alignment model is a local block adjacent to the $i$th local block of each target object sample alignment model, $B_j$ is a basis comprising the $j$th local blocks of the target object sample alignment models, $B_{ij}$ is used to represent a boundary vertex at a junction of the $i$th local block and the $j$th local block of each target object sample alignment model, $B_{ij}$ is a subset of $B_i$, $\mu_{ij}$ is an average value of $B_{ij}$, $B_{ji}$ is used to represent a boundary vertex at a junction of the $j$th local block and the $i$th local block of each target object sample alignment model, $B_{ji}$ is a subset of $B_j$, $\mu_{ji}$ is an average value of $B_{ji}$, $\beta$ is a weight, $\lambda$ is a weight, $\|\ \|_1$ is an L1 norm, and $\|\ \|_2$ is an L2 norm.

3. The method according to claim 1 or 2, wherein adjacent local blocks of the M local blocks of the first reconstruction model have a common boundary vertex at a junction.

4. The method according to any one of claims 1 to 3, wherein the obtaining a first reconstruction model of a target object comprises:

   obtaining target object point cloud data of the target object;
   obtaining a template model of the target object, wherein the template model is a model describing standard target object point cloud data of the target object in a preset standard posture;
   determining a point correspondence between the target object point cloud data and the template model;
   estimating, based on a skeleton-driven deformation technology and the point correspondence, a posture change parameter of the target object point cloud data relative to the template model; and
   deforming, by using the posture change parameter of the target object point cloud data relative to the template model, the template model into the first reconstruction model with a same posture as the target object point cloud data.

5. The method according to any one of claims 1 to 3, wherein the obtaining a first reconstruction model of a target object comprises:

   obtaining target object point cloud data of the target object;
   obtaining a template model of the target object, wherein the template model is a model describing standard target object point cloud data of the target object in a preset standard posture;
   determining a point correspondence between the target object point cloud data and the template model;
   estimating, based on a skeleton-driven deformation technology and the point correspondence, a posture change parameter of the target object point cloud data relative to the template model;
   deforming, by using the posture change parameter of the target object point cloud data relative to the template model, the template model into a skeleton deformation model with a same posture as the target object point cloud data, so that the skeleton deformation model is aligned with the target object point cloud data; and
   deforming, based on a mesh deformation technology, the skeleton deformation model, to obtain the first reconstruction model, so that the first reconstruction model matches a shape of the target object point cloud data.

6. The method according to any one of claims 1 to 5, wherein the obtaining N target object sample alignment models comprises:

   obtaining N target object sample models from a preset target object database;
   deforming, based on the skeleton-driven deformation technology and according to the posture parameter of the first reconstruction model, the N target object sample models into N target object sample skeleton deformation models corresponding to the same posture parameter as the first reconstruction model;
   dividing each target object sample skeleton deformation model into M local blocks, wherein the $i$th local block of each target object sample skeleton deformation model and the $i$th local block of the first reconstruction model are corresponding to a part that is of the target object and is represented by a same part name; and

performing at least one change of rotation, translation, or scaling on the ith local block of each target object sample skeleton deformation model, to obtain the N target object sample alignment models, wherein after the at least one change of rotation, translation, or scaling, the ith local block of each target object sample alignment model is aligned with the ith local block of the first reconstruction model, and i is 1, 2, ..., or M.

7. The method according to any one of claims 1 to 6, wherein the method further comprises:

performing smooth optimization processing on the second reconstruction model.

8. A data processing apparatus, comprising:

a first obtaining module, configured to obtain a first reconstruction model of a target object;
a division module, configured to divide the first reconstruction model obtained by the obtaining module into M local blocks, wherein different local blocks of the M local blocks of the first reconstruction model are corresponding to different parts of the target object, the different parts are represented by different part names, and M is a positive integer greater than 1;
a second obtaining module, configured to obtain N target object sample alignment models, wherein a posture parameter corresponding to a posture of each target object sample alignment model is the same as a posture parameter corresponding to a posture of the first reconstruction model obtained by the first obtaining module, and each target object sample alignment model comprises M local blocks, wherein the ith local block of each target object sample alignment model and the ith local block of the first reconstruction model are corresponding to a part that is of the target object and is represented by a same part name, the ith local block of each target object sample alignment model is aligned with the ith local block of the first reconstruction model, N is a positive integer, and i is 1, ..., or M; and
a determining module, configured to approximate the N target object sample alignment models obtained by the second obtaining module to the first reconstruction model obtained by the first obtaining module, to determine a second reconstruction model that is of the target object and comprises M local blocks, wherein the ith local block of the second reconstruction model is determined according to the ith local block of each target object sample alignment model.

9. The apparatus according to claim 8, wherein the determining module is specifically configured to:

obtain the second reconstruction model according to the following formula:

$$K_i = B_i c_i + \mu_i \qquad (i = 1, ..., M),$$

wherein $K_i$ is the ith local block of the M local blocks of the second reconstruction model, $B_i$ is a basis comprising the ith local blocks of the N target object sample alignment models, $\mu_i$ is an average value of vertex coordinates of the ith local blocks of the N target object sample alignment models, and $c_i$ is a coefficient vector of $B_i$, wherein a formula for obtaining $c_i$ comprises:

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 \right)$$
$$s.t. \quad c_i > 0 \qquad (i = 1, ..., M),$$

or

$$\mathbf{C} \triangleq \arg\min_{\mathbf{C}} \left( \sum_{i=1}^{M} \left\| B_i c_i + \mu_i - V_i \right\|_2^2 + \beta \sum_{(i,j) \in \Gamma} \left\| B_{ij} c_i + \mu_{ij} - B_{ji} c_j - \mu_{ji} \right\|_2^2 + \lambda \sum_{i=1}^{M} \left\| c_i \right\|_1 \right)$$
$$s.t. \quad c_i > 0 \qquad (i = 1, ..., M),$$

wherein $\mathbf{C} = \left( c_1^T, c_2^T, ..., c_M^T \right)^T$ , $V_i$ is the $i$th local block of the first reconstruction model, $\Gamma$ is a set of adjacent local blocks of the M local blocks of each target object sample alignment model, $(i, j) \in \Gamma$ represents that the $j$th local block of each target object sample alignment model is a local block adjacent to the $i$th local block of each target object sample alignment model, $B_j$ is a basis comprising the $j$th local blocks of the target object sample alignment models, $B_{ij}$ is used to represent a boundary vertex at a junction of the $i$th local block and the $j$th local block of each target object sample alignment model, $B_{ij}$ is a subset of $B_i$, $\mu_{ij}$ is an average value of $B_{ij}$, $B_{ji}$ is used to represent a boundary vertex at a junction of the $j$th local block and the $i$th local block of each target object sample alignment model, $B_{ji}$ is a subset of $B_j$, $\mu_{ji}$ is an average value of $B_{ji}$, $\beta$ is a weight, $\lambda$ is a weight, $\| \ \|_1$ is an L1 norm, and $\| \ \|_2$ is an L2 norm.

**10.** The apparatus according to claim 8 or 9, wherein adjacent local blocks of the M local blocks of the first reconstruction model obtained by the first obtaining module have a common boundary vertex at a junction.

**11.** The apparatus according to any one of claims 8 to 10, wherein the first obtaining module comprises:

a first obtaining unit, configured to obtain target object point cloud data of the target object;
a second obtaining unit, configured to obtain a template model of the target object, wherein the template model is a model describing standard target object point cloud data of the target object in a preset standard posture;
a determining unit, configured to determine a point correspondence between the target object point cloud data obtained by the first obtaining unit and the template model obtained by the second obtaining unit;
an estimation unit, configured to estimate, based on a skeleton-driven deformation technology and the point correspondence determined by the determining unit, a posture change parameter of the target object point cloud data that is relative to the template model determined by the second obtaining unit and that is determined by the first obtaining unit; and
a first deformation unit, configured to deform, by using the posture change parameter that is of the target object point cloud data relative to the template model and that is estimated by the estimation unit, the template model into the first reconstruction model with a same posture as the target object point cloud data.

**12.** The apparatus according to any one of claims 8 to 10, wherein the first obtaining module comprises:

a first obtaining unit, configured to obtain target object point cloud data of the target object;
a second obtaining unit, configured to obtain a template model of the target object, wherein the template model is a model describing standard target object point cloud data of the target object in a preset standard posture;
a determining unit, configured to determine a point correspondence between the target object point cloud data obtained by the first obtaining unit and the template model obtained by the second obtaining unit;
an estimation unit, configured to estimate, based on a skeleton-driven deformation technology and the point correspondence determined by the determining unit, a posture change parameter of the target object point cloud data that is relative to the template model determined by the second obtaining unit and that is determined by the first obtaining unit;
a second deformation unit, configured to deform, by using the posture change parameter that is of the target object point cloud data relative to the template model and that is estimated by the estimation unit, the template model into a skeleton deformation model with a same posture as the target object point cloud data, so that the skeleton deformation model is aligned with the target object point cloud data; and
a third deformation unit, configured to deform, based on a mesh deformation technology, the skeleton deformation model obtained by the second deformation unit, to obtain the first reconstruction model, so that the first reconstruction model matches a shape of the target object point cloud data.

**13.** The apparatus according to any one of claims 8 to 12, wherein the second obtaining module comprises:

a third obtaining unit, configured to obtain N target object sample models from a preset target object database;
a fourth deformation unit, configured to deform, based on the skeleton-driven deformation technology and according to the posture parameter of the first reconstruction model, the N target object sample models obtained by the third obtaining unit into N target object sample skeleton deformation models corresponding to the same posture parameter as the first reconstruction model;
a division unit, configured to divide each target object sample skeleton deformation model obtained by the fourth deformation unit into M local blocks, wherein the ith local block of each target object sample skeleton deformation model and the ith local block of the first reconstruction model are corresponding to a part that is of the target object and is represented by a same part name; and

a fourth obtaining unit, configured to perform at least one change of rotation, translation, or scaling on the ith local block that is of each target object sample skeleton deformation model and that is obtained by the division unit, to obtain the N target object sample alignment models, wherein after the at least one change of rotation, translation, or scaling, the ith local block of each target object sample alignment model is aligned with the ith local block of the first reconstruction model, and i is 1, 2, ..., or M.

14. The apparatus according to any one of claims 8 to 13, wherein the apparatus further comprises:

an optimization module, configured to perform smooth optimization processing on the second reconstruction model.

<u>100</u>

| |
|---|
| Obtain a first reconstruction model of a target object |

$\sim$ S110

| |
|---|
| Divide the first reconstruction model into M local blocks, where different local blocks of the M local blocks of the first reconstruction model are corresponding to different parts of the target object, the different parts are represented by different part names, and M is a positive integer greater than 1 |

$\sim$ S120

| |
|---|
| Obtain N target object sample alignment models, where a posture parameter corresponding to a posture of each target object sample alignment model is the same as a posture parameter corresponding to a posture of the first reconstruction model, and each target object sample alignment model includes M local blocks, where the $i^{th}$ local block of each target object sample alignment model and the $i^{th}$ local block of the first reconstruction model are corresponding to a part that is of the target object and is represented by a same part name, the $i^{th}$ local block of each target object sample alignment model is aligned with the $i^{th}$ local block of the first reconstruction model, N is a positive integer, and i is 1, ..., or M |

$\sim$ S130

| |
|---|
| Approximate the N target object sample alignment models to the first reconstruction model, to determine a second reconstruction model that is of the target object and includes M local blocks, where the $i^{th}$ local block of the second reconstruction model is determined according to the $i^{th}$ local block of each target object sample alignment model |

$\sim$ S140

FIG. 1

(a)

(b)

FIG. 2

(a)                                      (b)

FIG. 3

(a)

(b)

(c)

(d)

FIG. 4

**Data processing apparatus 200**

| First obtaining module 210 | Division module 220 | Second obtaining module 230 | Determining module 240 |

FIG. 5

**Data processing apparatus 300**

Processor 310

330

Memory 320

FIG. 6

# INTERNATIONAL SEARCH REPORT

| International application No. |
| --- |
| **PCT/CN2015/084335** |

**A. CLASSIFICATION OF SUBJECT MATTER**

G06T 17/00 (2006.01) i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, WPI, EPODOC, CNKI, IEEE, GOOGLE: human body, part, point cloud; ZHANG, Guofeng; CHEN, Zichong; WANG, Kangkan; body, model, rebuilt, gesture, align, cloud

**C. DOCUMENTS CONSIDERED TO BE RELEVANT**

| Category* | Citation of document, with indication, where appropriate, of the relevant passages | Relevant to claim No. |
| --- | --- | --- |
| X | CN 102208117 A (XIDIAN UNIVERSITY), 05 October 2011 (05.10.2011), description, paragraphs [0096]-[0164], and figures 2-5 | 1, 3, 7-8, 10, 14 |
| A | CN 102262783 A (TSINGHUA UNIVERSITY), 30 November 2011 (30.11.2011), the whole document | 1-14 |
| A | CN 103559735 A (CHONGQING ANZUANLI TECHNOLOGY CO., LTD.), 05 February 2014 (05.02.2014), the whole document | 1-14 |
| A | CN 101866497 A (BEIJING JIAOTONG UNIVERSITY), 20 October 2010 (20.10.2010), the whole document | 1-14 |
| A | EP 1302904 A2 (SOLIDWORKS CORPORATION CONCORD), 16 April 2003 (16.04.2003), the whole document | 1-14 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 October 2015 (09.10.2015) | **29 October 2015 (29.10.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LAN, Juan** Telephone No.: (86-10) **010-62413709** |
| --- | --- |

Form PCT/ISA/210 (second sheet) (July 2009)

## INTERNATIONAL SEARCH REPORT
Information on patent family members

| | International application No. |
|---|---|
| | **PCT/CN2015/084335** |

| Patent Documents referred in the Report | Publication Date | Patent Family | Publication Date |
|---|---|---|---|
| CN 102208117 A | 05 October 2011 | None | |
| CN 102262783 A | 30 November 2011 | None | |
| CN 103559735 A | 05 February 2014 | None | |
| CN 101866497 A | 20 October 2010 | None | |
| EP 1302904 A2 | 16 April 2003 | US 2003085889 A1 | 08 May 2003 |
| | | JP 2003162550 A | 06 June 2003 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510059955

**Non-patent literature cited in the description**

- **D. G. KENDALL.** A survey of the statistical theory of shape. *Statistical Science,* 1989, vol. 4 (2), 87-99

- **KANGKAN WANG.** A Two-Stage Framework for 3D Face Reconstruction from RGBD Images. *PAMI,* 2014, vol. 36 (8), 1493-1504